# EUROPEAN PATENT APPLICATION

(11) **EP 4 832 519 A1**
(43) Date of publication of application: **28.10.2026**
(21) Application number: 24910486.0
(22) Date of filing: 27.11.2024
(51) Int. Cl.: H04W 4/38, H04L 67/12, H04W 4/20, H04W 4/021

(54) **SENSING COOPERATION METHODS, COMMUNICATION APPARATUS AND STORAGE MEDIUM**

(30) Priority: 29.12.2023 CN 202311866036
(71) Applicant: ZTE Corporation, Shenzhen, Guangdong 518057 (CN)
(72) Inventor: CUI, Yijun, Shenzhen, Guangdong 518057 (CN); DAI, Qian, Shenzhen, Guangdong 518057 (CN); LI, Ping, Shenzhen, Guangdong 518057 (CN)
(74) Representative: Ziebig Hengelhaupt Intellectual Property Attorneys Patentanwaltskanzlei PartGmbB
(86) International application number: PCT/CN2024/134854
(87) International publication number: WO 2025/139553

(57) **Abstract**

Provided in the present disclosure are sensing cooperation methods, a communication apparatus and a storage medium. A method is applied to a sensing function entity, and comprises: performing sensing detection on a target by means of a first sensing unit; and performing cooperative sensing detection on the target by means of a second sensing unit.

## Description

The present disclosure claims priority to Chinese Patent Application No. 202311866036.3 filed on December 29, 2023, the entire contents of which are incorporated herein by reference.

### TECHNICAL FIELD

The present disclosure relates to the field of communications, and in particular, to a sensing cooperation method, a communication apparatus, and a storage medium.

### BACKGROUND

With the rapid development of information technologies, integrated sensing and communication technology plays an important role in the field of wireless communications. Integrated sensing and communication technology, by highly integrating wireless communication and sensing functions, can realize real-time sensing and monitoring of the environment, objects, and user states, and transmit and process such information quickly. Furthermore, integrated sensing and communication technology can also improve the reliability and adaptability of a network; through close cooperation between a sensing link and a communication link, resource allocation and network configuration can be optimized based on real-time sensing data to meet different sensing service requirements and environmental changes. Therefore, integrated sensing and communication technology has been widely applied in fields such as intelligent transportation, intelligent manufacturing, and the Internet of Things (IoT).

### SUMMARY

In a first aspect, there is provided a sensing cooperation method, applied to a sensing function entity. The method includes:
performing sensing detection on a target through a first sensing unit; and
performing cooperative sensing detection on the target through a second sensing unit.

In a second aspect, there is provided a sensing cooperation method, applied to a first sensing unit. The method includes:
sending a first message to a second sensing unit, the first message being used to request the second sensing unit to perform cooperative sensing detection on a target, the target being a target on which sensing detection is performed by the first sensing unit.

In a third aspect, there is provided a sensing cooperation method, applied to a second sensing unit. The method includes:
receiving a first message, where the first message is used to request the second sensing unit to perform cooperative sensing detection on a target, and the target is a target on which sensing detection is performed by a first sensing unit.

In a fourth aspect, there is provided a sensing cooperation apparatus, applied to a sensing function entity. The sensing cooperation apparatus includes a sensing detection module:
the sensing detection module is configured to perform sensing detection on a target through a first sensing unit; and
the sensing detection module is further configured to perform cooperative sensing detection on the target through a second sensing unit.

In a fifth aspect, there is provided a sensing cooperation apparatus, applied to a first sensing unit. The sensing cooperation apparatus includes:
a sending module, configured to send a first message to a second sensing unit, the first message being used to request the second sensing unit to perform cooperative sensing detection on a target, the target being a target on which sensing detection is performed by the first sensing unit.

In a sixth aspect, there is provided a sensing cooperation apparatus, applied to a second sensing unit. The sensing cooperation apparatus includes:
a receiving module, configured to receive a first message, where the first message is used to request the second sensing unit to perform sensing detection on a target, and the target is a target on which sensing detection is performed by a first sensing unit.

In a seventh aspect, there is provided a communication apparatus, including: a memory and a processor; the memory and the processor are coupled; the memory is configured to store instructions executable by the processor; the processor, upon executing the instructions, performs the sensing cooperation method according to any one of the above aspects or embodiments.

In an eighth aspect, there is provided a computer-readable storage medium, the computer-readable storage medium stores computer program instructions, the computer program instructions, upon being executed by a processor, implementing the sensing cooperation method according to any one of the above aspects or embodiments.

In a ninth aspect, there is provided a computer program product, the computer program product including computer program instructions, the computer program instructions, upon being executed by a processor, implementing the sensing cooperation method according to any one of the above aspects or embodiments.

Detailed descriptions of the fourth aspect to the ninth aspect and various implementations thereof in the present disclosure may refer to the detailed descriptions of the first aspect, the second aspect, the third aspect and various implementations thereof; and beneficial effects of the fourth aspect to the ninth aspect and various implementations thereof may refer to the beneficial effect analysis of the first aspect, the second aspect, the third aspect and various implementations thereof, which will not be repeated herein.

### BRIEF DESCRIPTION OF THE DRAWINGS

In order to describe the technical solutions in the present disclosure more clearly, a brief introduction will be given below to the accompanying drawings required to be used in some embodiments of the present disclosure. Obviously, the accompanying drawings in the following description are only drawings of some embodiments of the present disclosure, and a person of ordinary skill in the art may also obtain other drawings based on these drawings.
FIG. 1 is an architectural schematic diagram of a communication system provided by some embodiments of the present disclosure.
FIG. 2 is an architectural schematic diagram of another communication system provided by some embodiments of the present disclosure.
FIG. 3 is an architectural schematic diagram of yet another communication system provided by some embodiments of the present disclosure.
FIG. 4 is an architectural schematic diagram of yet another communication system provided by some embodiments of the present disclosure.
FIG. 5 is an architectural schematic diagram of yet another communication system provided by some embodiments of the present disclosure.
FIG. 6 is an architectural schematic diagram of yet another communication system provided by some embodiments of the present disclosure.
FIG. 7 is a flowchart of a sensing cooperation method provided by some embodiments of the present disclosure.
FIG. 8 is a flowchart of another sensing cooperation method provided by some embodiments of the present disclosure.
FIG. 9 is a flowchart of yet another sensing cooperation method provided by some embodiments of the present disclosure.
FIG. 10 is a flowchart of yet another sensing cooperation method provided by some embodiments of the present disclosure.
FIG. 11 is a flowchart of yet another sensing cooperation method provided by some embodiments of the present disclosure.
FIG. 12 is a flowchart of yet another sensing cooperation method provided by some embodiments of the present disclosure.
FIG. 13 is a flowchart of yet another sensing cooperation method provided by some embodiments of the present disclosure.
FIG. 14 is a flowchart of yet another sensing cooperation method provided by some embodiments of the present disclosure.
FIG. 15 is a flowchart of yet another sensing cooperation method provided by some embodiments of the present disclosure.
FIG. 16 is a flowchart of yet another sensing cooperation method provided by some embodiments of the present disclosure.
FIG. 17 is a structural schematic diagram of a sensing cooperation apparatus provided by some embodiments of the present disclosure.
FIG. 18 is a structural schematic diagram of another sensing cooperation apparatus provided by some embodiments of the present disclosure.
FIG. 19 is a structural schematic diagram of yet another sensing cooperation apparatus provided by some embodiments of the present disclosure.
FIG. 20 is a structural schematic diagram of a communication apparatus provided by some embodiments of the present disclosure.

### DETAILED DESCRIPTION

The technical solutions in the present disclosure will be described clearly and completely below in conjunction with the accompanying drawings in the present disclosure. Obviously, the described embodiments are only a part of the embodiments of the present disclosure, rather than all of the embodiments. Based on the embodiments in the present disclosure, all other embodiments obtained by a person of ordinary skill in the art without creative efforts fall within the protection scope of the present disclosure.

It should be noted that, in the present disclosure, wordings such as "exemplarily" or "for example" are used to indicate an example, illustration, or explanation. Any embodiment or design solution described as "exemplarily" or "for example" in the present disclosure should not be interpreted as being more preferred or more advantageous than other embodiments or design solutions. To be precise, the usage of wordings such as "exemplarily" or "for example" is intended to present related concepts in an exemplary manner.

Hereinafter, terms such as "first" and "second" are used only for descriptive purposes and should not be understood as indicating or implying relative importance or implicitly specifying a number of indicated technical features. Thus, a feature defined with "first", "second", etc., may explicitly or implicitly include one or more of such features.

In the description of the present disclosure, unless otherwise stated, "/" means "or", for example, A/B may denote A or B. The term "and/or" herein is merely an association relationship describing associated objects, indicating that three relationships may exist, for example, A and/or B may indicate: only A, only B, and both A and B. In addition, "at least one" means one or more, and "plurality of/multiple" means two or more.

Integrated sensing and communication has become one of the dominant trends of 6G technology and services. A 6G network is expected to be an integration of a mobile communication network, a sensing network, and a computing network. In a narrow sense, a sensing network refers to a system having capabilities such as target positioning (e.g., ranging, speed measurement, angle measurement), target imaging, target detection, target tracking, and target identification; in a broad sense, a sensing network refers to a system having a capability to sense all services, networks, users, terminals, and attributes and states of environmental objects. In a complex application scenario, a service information processing flow presents a characteristic of high coupling between communication and sensing. First, a sensing link and a communication link overlap in time and space domains; second, a sensing function and a communication function influence each other; third, both communication capability and sensing capability typically require large-bandwidth spectrum and large-aperture antennas to meet their requirements.

An integrated sensing and communication network architecture is a system architecture supporting wireless communication and wireless sensing functions, services, and applications. A mobile communication system includes two major parts, i.e., a network and a terminal, and has overall characteristics such as being centralized, hierarchical, tree-like, and cellular. However, sensing systems such as radar remote sensing do not have the concept of a network and a terminal, and there is no standardized unified architecture and paradigm. In order to realize integrated sensing and communication, the sensing system architecture, functional modules, processes, etc., need to be equivalently matched with the communication system. Time-frequency domain resources used by a sensing signal form a competitive or multiplexing relationship with a communication signal. However, since the position and state of a sensed target are constantly changing (for example, the target moves in a cellular network and crosses different communication nodes), in order to ensure sensing performance of the target, it is necessary to introduce a complete cooperation mechanism. When the sensed target moves in a cellular network and crosses different communication nodes, in order to maintain sensing performance of the target, it is necessary to introduce a complete cooperation mechanism between different communication nodes.

The methods provided by the embodiments of the present disclosure may be applied to various communication systems. For example, the communication system may be a 5th generation (5G) communication system, a Wi-Fi system, a 3GPP (3rd Generation Partnership Project) related communication system, a future evolved communication system (such as a 6th generation (6G) communication system, etc.), or a system integrating multiple systems, etc., and the embodiments of the present disclosure are not limited thereto.

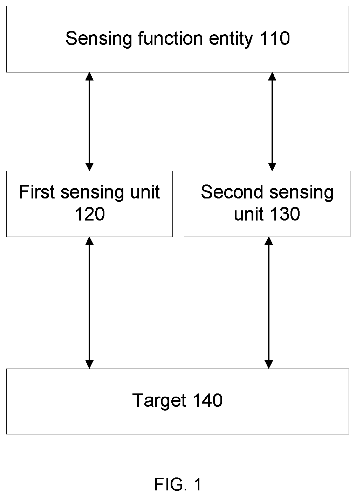

Referring to FIG. 1, an architectural schematic diagram of a communication system provided by the embodiments of the present disclosure is shown. As shown in FIG. 1, the communication system includes: a sensing function entity 110, a first sensing unit 120, a second sensing unit 130, and a target 140.

The sensing function entity 110 is configured to perform sensing management and process sensing data.

In some embodiments, the sensing function entity 110 includes at least one of: a first functional module, a second functional module, a third functional module, a fourth functional module, and a fifth functional module. The first functional module is configured to acquire a sensing service requirement; the second functional module is configured to acquire deployment information of sensing units; the third functional module is configured to determine a sensing signal sending configuration and a sensing echo receiving configuration; the fourth functional module is configured to manage cooperation between sensing units; the fifth functional module is configured to analyze the sensing service requirement and select a sensing unit that meets the sensing service requirement.

In some embodiments, the sensing function entity 110 includes a first sensing function entity 150 and a second sensing function entity 160. Exemplarily, the first sensing function entity 150 may be an upper-layer management entity of the sensing function entity 110; the second sensing function entity 160 may be a lower-layer management entity of the sensing function entity 110. The first sensing function entity 150 includes the first functional module and the second functional module. The second sensing function entity 160 includes: the third functional module, the fourth functional module, and the fifth functional module.

The first sensing unit 120 is configured to receive a sensing signal configuration sent from the sensing function entity 110, and perform sensing detection on the target 140 based on the sensing signal configuration.

The second sensing unit 130 is configured to receive a message sent from the sensing function entity 110 or the first sensing unit 120, and perform cooperative sensing detection on the target 140 based on the message.

In some embodiments, both the first sensing unit 120 and the second sensing unit 130 respectively include a sensing signal sending unit and a sensing echo receiving unit. The second functional module may be configured to acquire deployment information of sensing units and sensing capabilities of the sensing units in a sensing network, for example, including the following a1 to a6.

a1, a deployment mode of the sensing signal sending unit and the sensing echo receiving unit. Exemplarily, the deployment mode may be co-located deployment, co-site deployment, non-co-site deployment, or non-co-located deployment.

a2, deployment information of the sensing signal sending unit. Exemplarily, the deployment information of the sensing signal sending unit includes, but is not limited to: an identity document (ID) of a network device or a terminal device where the sensing signal sending unit is located. The ID of the network device or the terminal device include, but are not limited to: a communication base station ID, a distributed unit (DU) ID, a transmit/receive point (TRP) ID, a microcell (micell) ID, a reconfigurable intelligent surface (RIS) ID, and a neighbor cell relation (NCR) ID.

a3, deployment information of the sensing echo receiving unit. In some embodiments, the deployment information of the sensing echo receiving unit may refer to the deployment information in a2 above, which will not be repeated in the embodiments of the present disclosure herein.

a4, sensing capability of the sensing signal sending unit.

In some embodiments, the sensing capability of the sensing signal sending unit includes:
frequency domain capability of sensing signal sending; for example, frequency domain capabilities such as a bandwidth, continuous frequency domain or discontinuous frequency domain, a frequency domain granularity, a frequency domain comb configuration, etc.;
time domain capability of sensing signal sending; for example, time domain capabilities such as a supportable frame format, a duration, a start offset, a granularity, a periodic mode, a semi-persistent mode, an aperiodic mode, etc.; where a unit of granularity unit includes a relative unit such as a frame, a time slot, and a symbol, or an absolute unit such as a millisecond and a microsecond;
power for sensing signal sending; for example, a maximum available power for sensing signal sending;
a signal waveform used for sensing signal sending; in some embodiments, the signal waveform includes at least one of: an orthogonal frequency division multiplex (OFDM) signal waveform, an orthogonal time frequency space (OTFS) signal waveform, or a frequency modulated continuous wave (FMCW) signal waveform;
a reusable channel for a sensing signal; in some embodiments, the reusable channel includes at least one of: a channel of a synchronization signal, a channel of a channel state reference signal, a channel of a demodulation reference signal, a channel of a phase tracking reference signal, a channel of a sounding reference signal, a data channel, or a control channel;
a number of sensing beams;
an azimuth angle range and an elevation angle range of a single sensing beam;
a maximum azimuth angle range and a maximum elevation angle range of sensing signal sending;
a5, sensing capability of the sensing echo receiving unit.

In some embodiments, the sensing capability of the sensing echo receiving unit includes:
a frequency domain capability of sensing signal echo reception; for example, frequency domain capabilities such as a bandwidth, continuous frequency domain or discontinuous frequency domain, a frequency domain granularity, a frequency domain comb configuration, etc.;
time domain capability of sensing signal echo reception; for example, time domain capabilities such as a supportable frame format, a duration, a start offset, a granularity, a periodic mode, a semi-persistent mode, an aperiodic mode, etc.; where a unit of a granularity includes a relative unit such as a frame, a time slot, and a symbol, or an absolute unit such as a millisecond and a microsecond;
a sensitivity of sensing signal echo reception;
a waveform of a sensing signal; in some embodiments, the signal waveform includes at least one of: an OFDM signal waveform, an OTFS signal waveform, or an FMCW signal waveform;
a reusable channel for a sensing signal; in some embodiments, the reusable channel includes at least one of: a channel of a synchronization signal, a channel of a channel state reference signal, a channel of a demodulation reference signal, a channel of a phase tracking reference signal, a channel of a sounding reference signal, a data channel, or a control channel;
an arrival angle range of sensing signal echo reception; in some embodiments, the arrival angle range includes: a horizontal arrival angle range and a vertical arrival angle range.
a6, a sensing range.

In some embodiments, the sensing range includes: a planar sensing range and a vertical sensing range. The planar sensing range may be identified by a two-dimensional planar rectangular coordinate system, for example, the sensing range is divided into a plurality of grids, and the sensing range is identified by defining a grid size and a position of each grid with rectangular coordinates. Alternatively, the planar sensing range may also be identified by a polar coordinate system, for example, the sensing range is identified based on a central coordinate of the sensing range, a sensing radius, and a scanning range of a sensing azimuth angle. The vertical sensing range may be identified by adding a third dimensional coordinate (for example, adding a parameter) on the basis of the planar sensing range. For example, if the planar sensing range adopts a two-dimensional planar rectangular coordinate system, a vertical axis coordinate is added to describe a spatial thickness of the sensing range to identify the vertical sensing range. If the planar sensing range adopts a polar coordinate system, a pitch angle scanning angle range of a sensing signal is added to identify the vertical sensing range.

In some embodiments, the third functional module may be configured to determine a sensing signal sending configuration and a sensing echo receiving configuration, and manage the sensing signal sending configuration and the sensing echo receiving configuration, for example, including the following b1 to b12.

b1, determining, according to a sensing indicator, minimum requirements for a time domain resource, a frequency domain resource, a code domain resource, and a spatial domain resource for sensing signal sending.

In some embodiments, the spatial domain resource includes at least one of:
a number of used sensing beams;
a used sensing beam; exemplarily, the sensing beam may be identified based on a beam number or a reference signal multiplexed by the sensing beam;
a main lobe direction, a main lobe horizontal width and vertical width of each sensing beam, or an azimuth angle range and an elevation angle range of each sensing beam;
a duration of a sensing beam, an order of sensing beam switching, and a time point of sensing beam switching; or
a maximum azimuth angle range and a maximum elevation angle range of sensing signal sending.

In some embodiments, the code domain resource includes: a codeword sequence used by a sensing signal.

b2, negotiating, with a communication entity where the sensing signal sending unit is located, available time domain resources, frequency domain resources, code domain resources, and spatial domain resources during sensing signal sending.

b3, negotiating, with a communication entity where the sensing echo receiving unit is located, available time domain resources, frequency domain resources, code domain resources, and spatial domain resources during sensing signal echo reception.

b4, configuring, for the sensing signal sending unit, time domain resources, frequency domain resources, code domain resources, and spatial domain resources used in sensing signal sending.

b5, configuring, for the sensing echo receiving unit, time domain resources, frequency domain resources, code domain resources, and spatial domain resources used in sensing signal echo reception.

b6, acquiring changes of available sensing resources of the sensing signal sending unit and the sensing echo receiving unit.

b7, indicating the used sensing signal sending unit. Exemplarily, the indication may be performed based on a generation NodeB (gNB) identifier, a TRP identifier, a DU identifier, a terminal identifier, etc.

b8, indicating the used sensing echo receiving unit. Exemplarily, the indication may be performed based on a gNB identifier, a TRP identifier, a DU identifier, a terminal identifier, etc.

b9, indicating a transceiving mode of a sensing signal. Exemplarily, the transceiving mode includes: transmitting and receiving by the same entity, and transmitting by entity A and receiving by entity B. When the sensing signal sending unit and the sensing echo receiving unit are deployed in the same communication network device or the same physical address, the transceiving mode of transmitting and receiving by the same entity may be adopted. When the sensing signal sending unit and the sensing echo receiving unit are deployed in different communication network devices or different physical addresses, the transceiving mode of transmitting by entity A and receiving by entity B may be adopted.

b10, configuring, for the sensing signal sending unit, a waveform, a multiplexed channel, power, a time domain resource, a frequency domain resource, a spatial domain resource, and a code domain resource of a sensing signal.

b11, configuring, for the sensing echo receiving unit, a waveform, a multiplexed channel, power, a time domain resource, a frequency domain resource, a spatial domain resource, and a code domain resource of a signal used in echo reception.

b12, indicating a sensing range to the sensing signal sending unit and the sensing echo receiving unit based on a service requirement and an indicator requirement of a sensing service.

In some embodiments, the sensing range may be indicated by one of the following:
defined with a three-dimensional coordinate of the sensing signal sending unit as a center, and with a sensing radius and a horizontal azimuth angle range and an elevation angle range of sensing beam scanning;
defined by a sensing resolution attenuation curve; it is understandable that a sensing signal attenuates as a propagation distance increases; a sensing beam is limited by an antenna array beamforming characteristic, and the closer it is to an edge of a scanning angle range, the greater the signal attenuation, and thus a sensing resolution also attenuates with distance and angle.

In some embodiments, the fourth functional module is configured to manage cooperation between sensing units, for example, including the following c1 to c2.

c1, if two adjacent sensing units run a sensing service of an area sensing type, controlling the two adjacent sensing units to coordinate resources of sensing signals to avoid mutual sensing signal interference between the two sensing units. The fourth functional module splices sensing data reported by the two adjacent sensing units, and if there is sensing data with overlapping sensing ranges, the fourth functional module may fuse the sensing data.

c2, if one sensing unit runs a sensing service of a tracking sensing type and performs tracking sensing on a specific target, when a sensing accuracy requirement of the specific target is higher than that of a scenario of a sensing service of the area sensing type, the sensing unit needs to configure, for the specific target, sensing resources different from those for other sensing services (usually, more resources are configured for the specific target). The fourth functional module needs to locate a position of the specific target in real time and adjust a coverage range of a sensing beam in real time. When the specific target enters an edge of the sensing range of the sensing unit, a weak sensing area, or a sensing blind area, the fourth functional module decides a cooperative sensing mode and a cooperative sensing resource configuration between the sensing units to ensure sensing performance and sensing continuity of the specific target.

Exemplarily, the fourth functional module may determine the following contents of a sensing unit A:
whether to keep sensing the specific target;
whether to switch the transceiving mode of a sensing signal. For example, switching from transmitting and receiving by the same entity to transmitting by entity A and receiving by entity B. Transmitting by entity A and receiving by entity B includes that: the sensing unit A transmits, and a sensing unit B participating in cooperative sensing detection receives; or the sensing unit B participating in cooperative sensing detection transmits, and the sensing unit A receives; or the sensing unit A transmits, and a terminal B participating in cooperative sensing detection receives; or the terminal B participating in cooperative sensing detection transmits, and the sensing unit A receives.

In some embodiments, the fourth functional module may also determine a sensing unit participating in sensing cooperation. Exemplarily, the fourth functional module determines, based on a position of the specific target, in which sensing range of a cooperative sensing unit the specific target is located, and selects one or more sensing units to participate in cooperative sensing detection.

In some embodiments, the fourth functional module may also negotiate a transceiving mode of a sensing signal and a configuration of sensing resources with the sensing units participating in cooperative sensing detection. During the negotiation, related interaction information elements include:
interaction between the fourth functional module and the sensing units participating in cooperative sensing detection; the content of the interaction includes: an application requirement of sensing cooperation, characteristics of a sensing target, a transceiving mode of a sensing signal, a sensing resource configuration required for performing cooperative sensing detection, and a processing mode of sensing data;
interaction between a sensing unit participating in cooperative sensing detection and another sensing unit participating in cooperative sensing detection; the content of the interaction includes: a response to a sensing cooperation application (for example, accepting, rejecting, or modifying the sensing cooperation application), a transceiving mode of a sensing signal, and a sensing resource configuration.

In some embodiments, the fifth functional module is configured to parse a sensing service requirement and select a sensing unit that meets the sensing service requirement, for example, including the following d1 to d5.

d1, determining a sensing service type. The sensing service type includes: an area sensing type and a tracking sensing type.

d2, screening sensing targets. Exemplarily, if the sensing service type is the tracking sensing type, a feature description of a sensing target needs to be provided. The feature description of the sensing target includes at least one of:
real-time position information of the target; for example, a two-dimensional planar rectangular coordinate system coordinate, a polar coordinate system coordinate, a three-dimensional rectangular coordinate system coordinate, and a three-dimensional polar coordinate system coordinate of the target;
a historical movement track of the target;
a predicted movement track of the target;
a contour feature of the target; for example, a contour, a two-dimensional size, and a three-dimensional size of the target;
an echo signal parameter of the target; for example, a real-time value and/or a historical value of a sensing echo intensity of the target;
a sensing accuracy of the target; for example, the sensing accuracy of the target and a change history of the sensing accuracy of the target; or
an identifier of the target; in some embodiments, the target may be identified based on a target serial number; the target serial number is configured to map the feature description of the target above, and when there are multiple sensing targets, the targets may be distinguished by serial numbers.

d3, determining a sensing target.

In some embodiments, the sensing indicator includes at least one of:
a positioning accuracy; for example, a horizontal accuracy and a vertical accuracy. The horizontal accuracy refers to a sensing result error on a two-dimensional reference plane or a horizontal plane. The vertical accuracy refers to a sensing result error on a vertical axis or in height;
a sensing accuracy of distance, speed, and acceleration; where the sensing accuracy of distance, speed, and acceleration includes a horizontal accuracy and a vertical accuracy, and is used to describe a closeness of a speed measured sensing result of the target (i.e., speed) to its true speed;
sensing resolution of distance, speed, and acceleration, used to describe a minimum difference in a measurement magnitude (such as distance and speed) of the sensing target, where the minimum difference allows targets of different magnitudes to be detected;
a refresh rate; for example, a rate of sensing result is generation;
a missed detection probability; for example, a statistical missed detection probability within a preset time for the sensing target;
a false alarm probability; for example, a statistical false alarm probability within a preset time for the sensing target; or
a maximum sensing service delay; for example, a time from triggering a sensing requirement to outputting a sensing result.

d4, selecting a sensing signal sending unit and a sensing echo receiving unit.

d5, determining, according to a sensing range, a transceiving mode of a sensing signal for a sensing unit.

In some embodiments, the sensing function entity further includes a sixth functional module, and the sixth functional module is configured to process sensing data.

In some embodiments, the sixth functional module is configured to process sensing data, including at least one of:
saving sensing data; for example, saving an original sensing echo signal;
forwarding sensing data; for example, forwarding an original sensing echo signal;
measuring a sensing echo signal; for example, calculating a sensing measurement value such as a time delay, an angle, a speed, and a Doppler of the sensing echo signal;
screening out a target based on sensing data;
determining feature information of a target based on sensing data;
counting a false alarm rate and a missed alarm rate;
fusing sensing data; for example, positioning data fusion, track fusion, and target feature fusion; or
constructing a sensing map.

In some embodiments, the sixth functional module is deployed in a core network and/or an access network, where the access network includes a communication node, a base station, a communication centralized unit, a communication distributed unit, and a terminal device.

In some embodiments, each function part of of the above sixth functional module for processing sensing data may be deployed in the same position, network element, or terminal, or may be deployed in different positions, network elements, or terminals.

In some embodiments, the sensing function entity may be deployed in different positions of a core network or an access network to flexibly perform sensing detection on the target 140. Architectures of the communication system when the sensing function entity is deployed in different positions are introduced below.

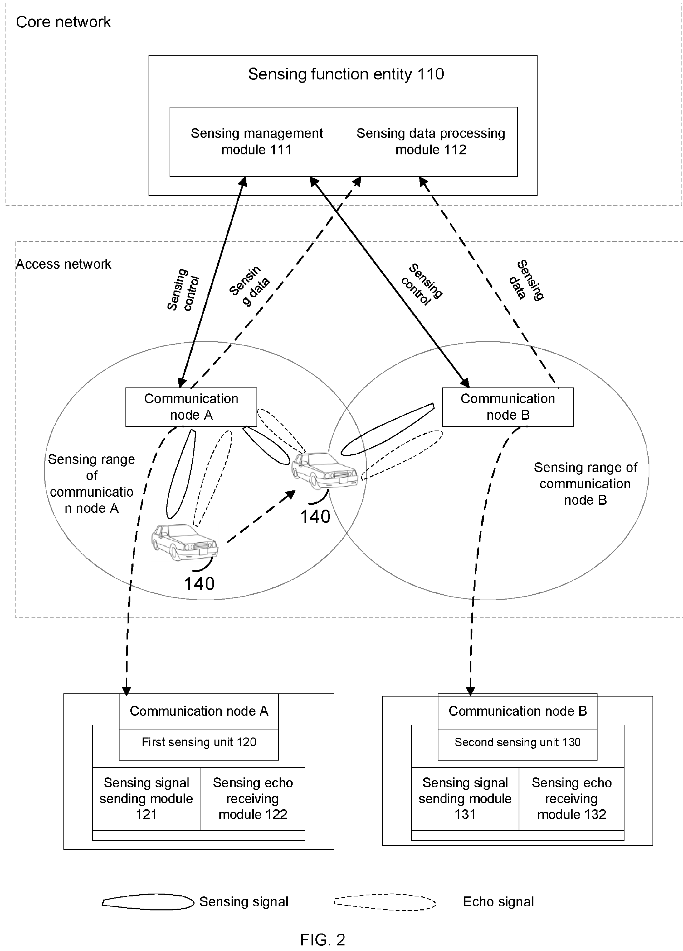

In some embodiments, as shown in FIG. 2, the sensing function entity 110 is deployed in a core network, and the first sensing unit 120 and the second sensing unit 130 are respectively deployed in a communication node A and a communication node B of an access network.

In some embodiments, the sensing function entity 110 may be deployed in an integrated manner with an existing network element of the core network; or, may also be deployed independently in the core network.

In some embodiments, the sensing function entity 110 performs a signaling interaction flow with the first sensing unit 120 and/or the second sensing unit 130 through an interface between the core network and the access network. Exemplarily, the sensing function entity 110 includes a sensing management module 111 and a sensing data processing module 112. The sensing management module 111 may perform sensing control on the first sensing unit 120 and the second sensing unit 130, and the sensing data processing module 112 may receive sensing data sent from the first sensing unit 120 and the second sensing unit 130. The signaling interaction flow is used to configure the second sensing unit 130 to perform cooperative sensing detection on the target 140.

In some embodiments, as shown in FIG. 2 above, in a process where the target 140 moves from a sensing range of the first sensing unit 120 to a sensing range of the second sensing unit 130, the first sensing unit 120 and the second sensing unit 130 establish cooperative sensing of the target 140 based on a signaling interaction flow. Exemplarily, the first sensing unit 120 includes a sensing signal sending module 121 and a sensing echo receiving module 122, and the second sensing unit 130 includes a sensing signal sending module 131 and a sensing echo receiving module 132. The sensing management module 111 may perform sensing control on the sensing signal sending module 121 and the sensing signal sending module 131, so that the sensing signal sending module 121 and the sensing signal sending module 131 send sensing signals to the target 140. Meanwhile, the sensing echo receiving module 122 and the sensing echo receiving module 132 may receive echo signals (i.e., sensing data) sent from the target 140 and send the echo signals to the sensing data processing module 112. Thus, cooperative sensing of the target 140 may be established, and sensing detection on the target 140 may be realized.

In some embodiments, the communication node of the access network may be a base station, a relay node, or an integrated broadband access (IBA) node.

It should be noted that the forms of the communication node of the above access network are only some examples given by the embodiments of the present disclosure. Based on differences in actual scenarios and sensing service requirements, the communication node may also have other implementation forms, and the embodiments of the present disclosure are not limited thereto.

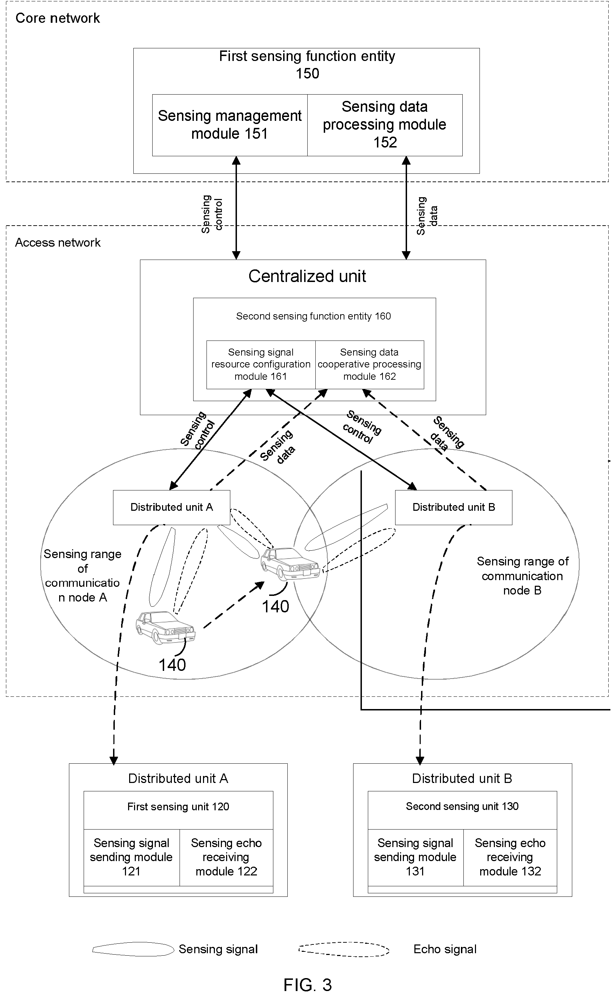

In some embodiments, in a case where the sensing function entity 110 includes the first sensing function entity 150 and the second sensing function entity 160, as shown in FIG. 3, the first sensing function entity 150 is deployed in a core network, and the second sensing function entity 160 is deployed in a centralized unit of an access network. The first sensing unit 120 and the second sensing unit 130 are respectively deployed in a distributed unit A and a distributed unit B of the access network.

In some embodiments, the first sensing function entity 150 in the core network includes a sensing management module 151 and a sensing data processing module 152. The sensing management module 151 retains basic sensing management functions (for example, acquiring a sensing service requirement, acquiring deployment information and sensing related capabilities of sensing units, selecting a sensing unit, determining a sensing indicator, etc.). The sensing data processing module 152 retains high-level sensing data processing functions (for example, identification of a sensing target, precise positioning, generation of a target track, counting of a false alarm rate and a missed alarm rate, screening of sensing data of a tracking sensing mode, fusion of sensing data of a cooperative sensing mode (including fusion of positioning data, track fusion, and feature fusion), construction of a sensing map, etc.).

In some embodiments, as shown in FIG. 3 above, in a process where the target 140 moves from a sensing range of the first sensing unit 120 to a sensing range of the second sensing unit 130, the centralized unit controls the first sensing unit 120 and the second sensing unit 130 to establish cooperative sensing of the target 140.

Exemplarily, the second sensing function entity 160 includes a sensing signal resource configuration module 161 and a sensing data cooperative processing module 162. The sensing management module 151 may perform sensing control on the sensing signal resource configuration module 161, and the sensing signal resource configuration module 161 may further perform sensing control on the sensing signal sending module 121 and the sensing signal sending module 131. At this time, the sensing signal sending module 121 and the sensing signal sending module 131 may send sensing signals to the target 140. Meanwhile, the sensing echo receiving module 122 and the sensing echo receiving module 132 may receive echo signals (i.e., sensing data) sent from the target 140, and send the echo signals to the sensing data cooperative processing module 162, and the sensing data cooperative processing module 162 further sends the sensing data to the sensing data processing module 152. Thus, cooperative sensing of the target 140 may be established, and sensing detection on the target 140 may be realized.

In some embodiments, the centralized unit may be a base station or a central unit (CU). The distributed unit may be a distributed unit (DU), a transmit/receive processing module (TRP), a transceiver, a distributed microcell (micell), a reconfigurable intelligent surface (RIS) unit, or a network controllable reconfigurable intelligent surface (NCR).

In some embodiments, the above base station may be a base station in long term evolution (LTE), long term evolution advanced (LTEA), or an evolutional node B (eNB or eNodeB), a base station device in a 5G network, or a base station in a future communication system, etc. The base station may include various network-side devices such as a macro base station, a micro base station, a home base station, a wireless remote unit, a reconfigurable intelligent surface (RIS), a router, a relay, and a wireless fidelity (WIFI) device.

It should be noted that the forms of the above centralized unit and distributed unit are only some examples given by the embodiments of the present disclosure. Based on differences in actual scenarios and sensing service requirements, the centralized unit and distributed unit may also have other implementation forms, and the embodiments of the present disclosure are not limited thereto.

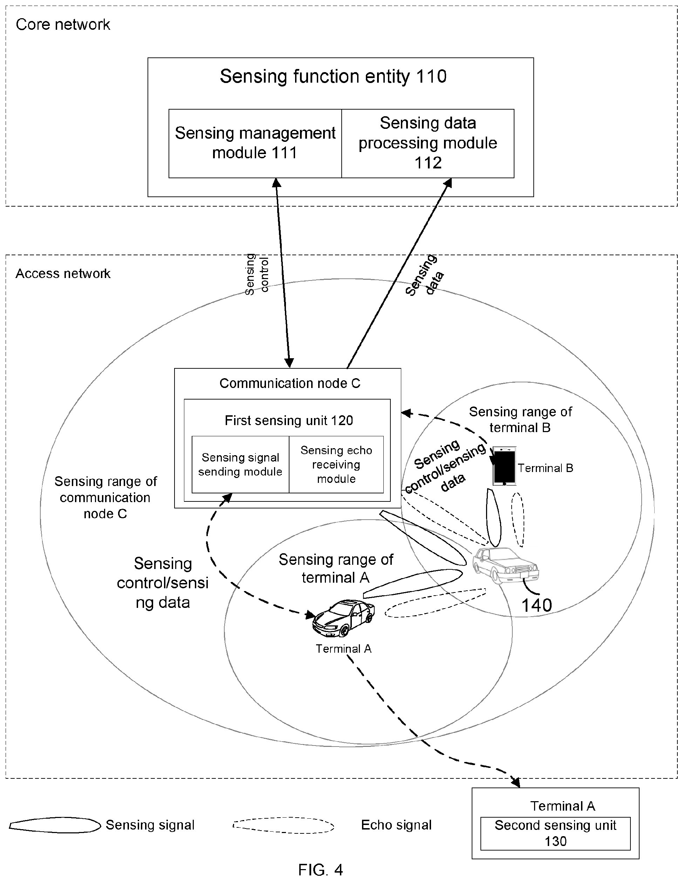

In some embodiments, as shown in FIG. 4, the sensing function entity 110 is deployed in a core network, the first sensing unit 120 is deployed in a communication node C of an access network, and the second sensing unit 130 is deployed in a terminal of the access network.

In some embodiments, the sensing function entity 110 may also be deployed in an access network.

In some embodiments, in a process where the target 140 moves to an edge of a sensing range of the communication node C, the communication node C establishes cooperative sensing of the target 140 with a terminal that has sensing capability and whose sensing range covers the target 140.

Exemplarily, the second sensing unit 130 may be deployed in a terminal A and a terminal B. The sensing function entity 110 performs sensing control for the terminal A and the terminal B through the communication node C and receives echo signals (i.e., sensing data). For example, the communication node C includes a sensing signal sending module and a sensing echo receiving module. The sensing management module 111 of the sensing function entity 110 performs sensing control on the communication node C, so that the sensing signal sending module of the communication node C performs sensing control on the terminal A and the terminal B. At this time, the terminal A and the terminal B may send sensing signals to the target 140, receive echo signals (i.e., sensing data) sent from the target 140, and send the echo signals to the sensing echo receiving module of the communication node C. The sensing echo receiving module finally sends the sensing data to the sensing data processing module 112 of the sensing function entity 110. Thus, cooperative sensing of the target 140 may be established, and sensing detection on the target 140 may be realized.

In some embodiments, the terminal may be a mobile phone, a tablet computer (Pad), a computer with a wireless transceiving function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit application scenarios. The terminal may sometimes also be referred to as a user, a user equipment (UE), an access terminal, a UE unit, a UE station, a mobile station, a mobile platform, a remote station, a remote terminal, a mobile device, a UE terminal, a wireless communication device, a UE proxy, or a UE apparatus, etc., and the embodiments of the present disclosure are not limited thereto.

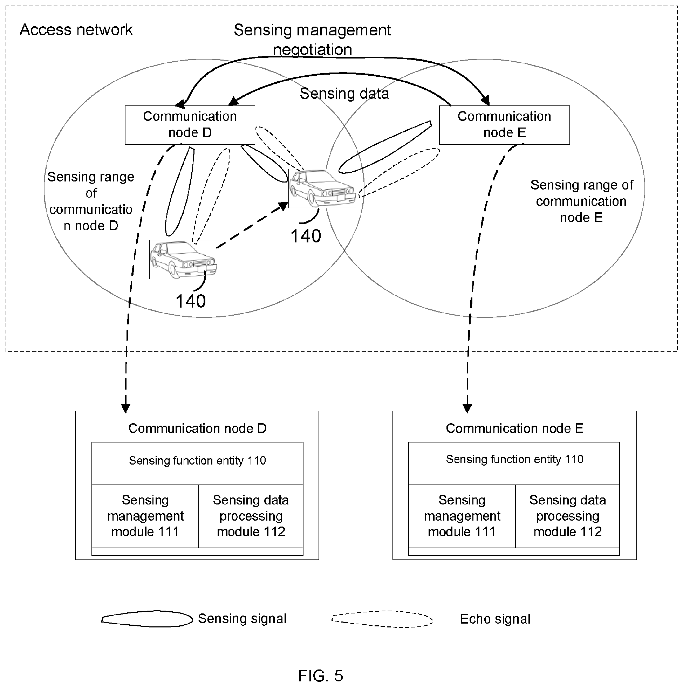

In some embodiments, as shown in FIG. 5, the sensing function entity 110 is deployed in a communication node of an access network. Exemplarily, the sensing function entity 110 is deployed in a communication node D and a communication node E.

In some embodiments, in a process where the target 140 moves from a sensing range of the communication node D to a sensing range of the communication node E, the communication node D and the communication node E establish cooperative sensing of the target 140.

Exemplarily, in the process where the target 140 moves, the communication node D sends a sensing signal to the target 140 and receives an echo signal (i.e., sensing data) sent from the target 140. In addition, the communication node D may also negotiate sensing management with the communication node E, so that the communication node E sends a sensing signal to the target 140 and receives an echo signal sent from the target 140. After receiving the echo signal, the communication node E also sends the echo signal to the communication node D. Thus, cooperative sensing of the target 140 may be established, and sensing detection on the target 140 may be realized.

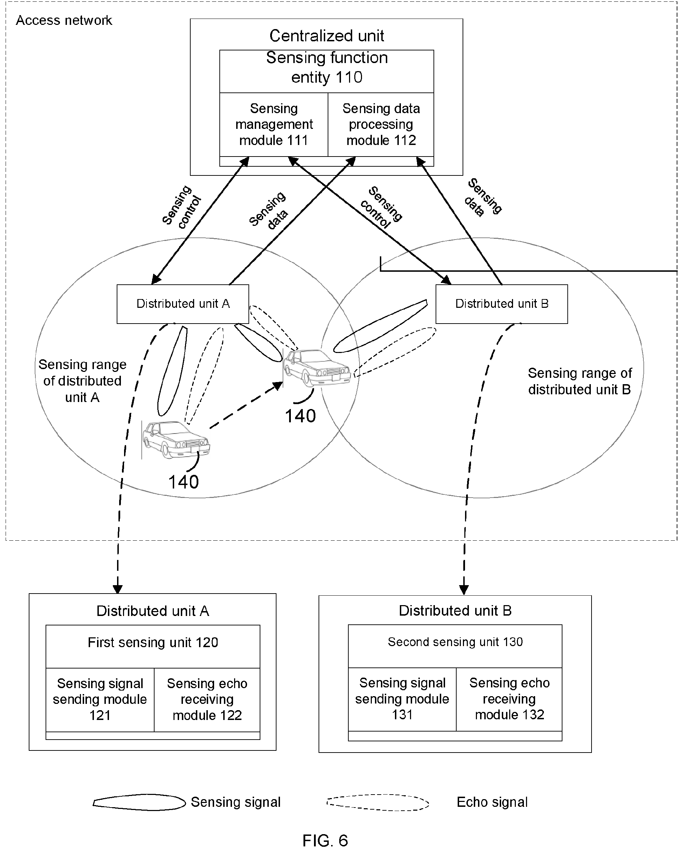

In some embodiments, as shown in FIG. 6, the sensing function entity 110 is deployed in a centralized unit of an access network, and the first sensing unit 120 and the second sensing unit 130 are respectively deployed in a distributed unit A and a distributed unit B of the access network.

In some embodiments, in a process where the target 140 moves from a sensing range of the distributed unit A to a sensing range of the distributed unit B, the centralized unit controls the distributed unit A and the distributed unit B to establish cooperative sensing of the target 140. Exemplarily, the sensing management module 111 of the sensing function entity 110 may perform sensing control on the distributed unit A (i.e., the first sensing unit 120) and the distributed unit B (i.e., the second sensing unit 130), so that the distributed unit A and the distributed unit B send sensing signals to the sensing target 140 and receive echo signals (i.e., sensing data) of the sensing target 140. After receiving the echo signals, the distributed unit A and the distributed unit B also send the echo signals to the sensing data processing module 112 of the sensing function entity 110. Thus, cooperative sensing of the target 140 may be established, and sensing detection on the target 140 may be realized.

It should be noted that the above scenarios are used to illustrate the technical solutions of the embodiments of the present disclosure more clearly and do not constitute a limitation on the technical solutions provided by the embodiments of the present disclosure. A person of ordinary skill in the art may know that, as system architectures evolve and new service scenarios emerge, the technical solutions provided by the embodiments of the present disclosure are equally applicable to similar technical problems.

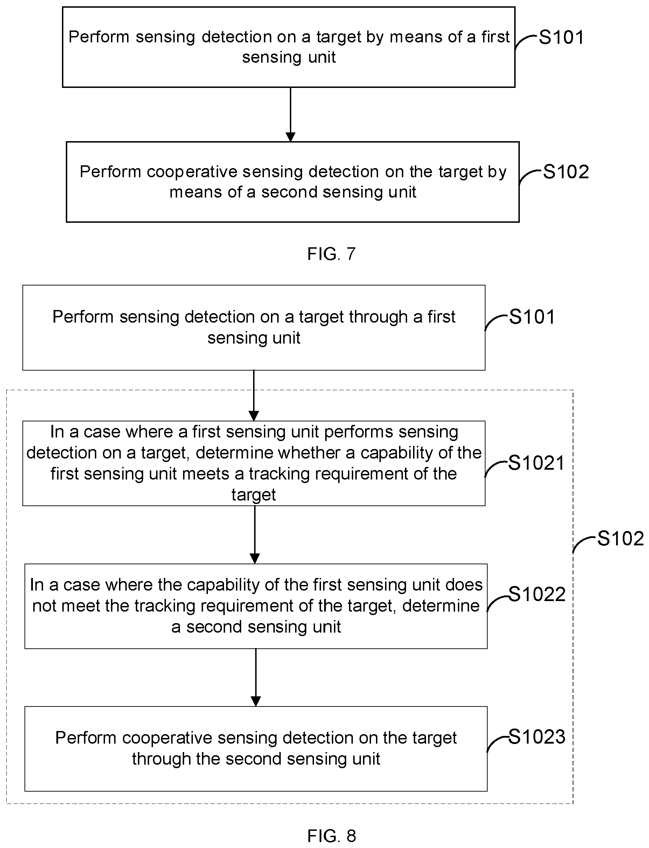

FIG. 7 is a sensing cooperation method provided by the embodiments of the present disclosure, applied to a sensing function entity; the method includes S101 and S102.

In S101: sensing detection is performed on a target through a first sensing unit.

In some embodiments, based on different sensing service types, a target may be one or more target areas, or may be one or more target objects. For example, when the sensing service type is an area sensing type, the target may be one or more target areas. When the sensing service type is a tracking sensing type, the target may be one or more target objects.

In some embodiments, the sensing function entity determines, according to a requirement of a sensing service, a first sensing unit used to execute the sensing service; and sends a sensing signal configuration of the first sensing unit to the first sensing unit. The first sensing unit determines whether to accept the sensing signal configuration based on the sensing signal configuration of the first sensing unit and its own capability. When the first sensing unit accepts the sensing signal configuration, the first sensing unit may perform sensing detection on the target based on the sensing signal configuration, that is, the sensing function entity may perform sensing detection on the target through the first sensing unit.

In some embodiments, the sensing signal configuration includes at least one of: a sensing signal sending configuration, a sensing echo receiving configuration, a sensing range configuration, or a sensing signal transceiving mode configuration.

In some embodiments, the sensing signal sending configuration includes at least one of: a signal waveform used for sensing signal sending, a multiplexed channel, a power configuration, a time domain configuration, a frequency domain configuration, a spatial domain configuration, or a code domain configuration.

In some embodiments, the signal waveform includes at least one of: an OFDM signal waveform, an OTFS signal waveform or and an FMCW signal waveform.

In some embodiments, the multiplexed channel includes at least one of: a channel of a synchronization signal, a channel of a channel state reference signal, a channel of a demodulation reference signal, a channel of a phase tracking reference signal, a channel of a sounding reference signal, a data channel, or a control channel.

In some embodiments, the time domain configuration includes at least one of: a duration, a start offset, a granularity, a periodic mode, a semi-persistent mode, or an aperiodic mode.

In some embodiments, the frequency domain configuration includes at least one of: whether a frequency band is continuous, a bandwidth of a sensing signal, or a comb-shaped frequency domain resource configuration.

In some embodiments, the spatial domain configuration includes at least one of: a number of sensing beams, identifiers of sensing beams, angle information of sensing beams, durations of sensing beams, a sensing beam switching order, sensing beam switching time points, or angle range information of sensing signal sending.

In some embodiments, the sensing echo receiving configuration includes at least one of: a signal waveform used for sensing echo reception, a multiplexed channel, a time domain configuration, a frequency domain configuration, a spatial domain configuration, or a code domain configuration.

In some embodiments, the sensing range configuration includes: configuring a sensing range with a three-dimensional coordinate of a transmission point of a sensing signal as a center and with a sensing radius and a horizontal angle azimuth range and an elevation angle range of sensing beam scanning; and/or configuring a sensing range based on a sensing resolution attenuation curve.

In S102: cooperative sensing detection is performed on the target through a second sensing unit.

In some embodiments, as shown in FIG. 8, the above step S102 may be implemented as: S1021 to S1023.

In S1021: in a case where the first sensing unit performs sensing detection on the target, whether a capability of the first sensing unit meets a tracking requirement of the target is determined.

In some embodiments, when the first sensing unit performs sensing detection on the target, the first sensing unit may send sensing data of the target to the sensing function entity, and the sensing function entity may parse the sensing data and determine whether the capability of the first sensing unit meets the tracking requirement of the target. For example, it is determined whether a sensing accuracy of the first sensing unit meets a sensing accuracy requirement of the target.

In S1022: in a case where the capability of the first sensing unit does not meet the tracking requirement of the target, a second sensing unit is determined.

In some embodiments, in a case where the capability of the first sensing unit does not meet the tracking requirement of the target, the sensing function entity may determine, among sensing units adjacent to the first sensing unit, a second sensing unit that may perform cooperative sensing detection. Exemplarily, the second sensing unit may be a sensing unit whose sensing range has a highest overlap with the sensing range of the first sensing unit.

In S1023: cooperative sensing detection is performed on the target through the second sensing unit.

In some embodiments, the sensing function entity sends a sensing signal configuration of the second sensing unit to the second sensing unit, and the second sensing unit determines whether to accept the sensing signal configuration based on the sensing signal configuration of the second sensing unit and its own capability. When the second sensing unit accepts the sensing signal configuration, the second sensing unit may perform cooperative sensing detection on the target, that is, the sensing function entity may perform cooperative sensing detection on the target through the second sensing unit.

It may be understood that, based on the sensing cooperation method provided by the embodiments of the present disclosure, the sensing function entity performs sensing detection on the target through the first sensing unit, so that sensing data of the target may be acquired and sensing detection on the target is realized. Meanwhile, the sensing function entity performs cooperative sensing detection on the target through the second sensing unit, so that a more in-depth and detailed sensing detection may be performed on the target on the basis of the first sensing unit, thereby compensating for deficiencies when the first sensing unit performs sensing detection on the target (for example, when the target moves to an edge area of the sensing range of the first sensing unit, a result of sensing detection performed on the target by the first sensing unit is not accurate enough). The embodiments of the present disclosure, by combining the first sensing unit and the second sensing unit and based on the cooperative sensing detection of the second sensing unit to assist the first sensing unit in performing sensing detection on the target, may improve sensing accuracy, enhance sensing and identification capabilities of the target, and ensure sensing performance of the target.

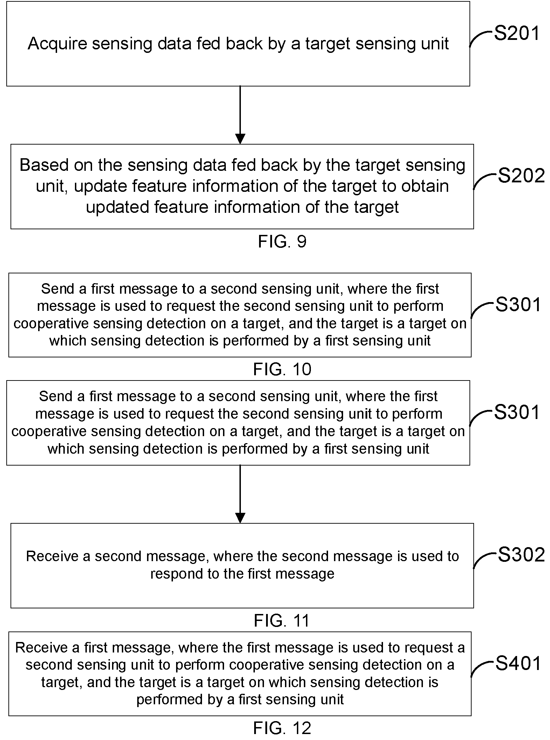

In some embodiments, as shown in FIG. 9, the above method further includes: S201 to S202.

In S201: sensing data fed back by a target sensing unit is acquired.

The target sensing unit is a sensing unit used to perform sensing detection on the target, and the target sensing unit at least includes the first sensing unit and the second sensing unit.

In S202: based on the sensing data fed back by the target sensing unit, feature information of the target is updated, and updated feature information of the target is obtained.

It can be understood that, in the method provided by the embodiments of the present disclosure, by acquiring the sensing data fed back by the target sensing unit, sensing information such as a position, a speed, and a direction of the target may be learned in time, so that the sensing function entity may learn changes of the target in time. Meanwhile, the sensing function entity updates the feature information of the target based on the sensing data, so that the sensing function entity may acquire a real-time state of the target in time, enhancing the sensing performance of the sensing function entity on the target.

In some embodiments, the above method further includes: sending the updated feature information of the target to the target sensing unit.

It can be understood that, in the method provided by the embodiments of the present disclosure, the sensing function entity sends the updated feature information to the target sensing unit, so that the target sensing unit may adjust a configuration of sensing detection on the target in time based on the updated feature information, improve the sensing performance of the target, enhance the sensing capability of the target, and further improve the sensing accuracy.

In some embodiments, the sensing function entity includes at least one of: a first functional module, a second functional module, a third functional module, a fourth functional module, and a fifth functional module; where the first functional module is configured to acquire a sensing service requirement; the second functional module is configured to acquire deployment information of sensing units; the third functional module is configured to determine a sensing signal sending configuration and a sensing echo receiving configuration; the fourth functional module is configured to manage cooperation between sensing units; the fifth functional module is configured to parse the sensing service requirement and select a sensing unit that meets the sensing service requirement. Exemplarily, after the first functional module acquires the sensing service requirement, the fifth functional module parses the sensing service requirement to determine a first sensing unit that meets the sensing service requirement and may execute a sensing service.

In some embodiments, the sensing function entity includes a first sensing function entity and a second sensing function entity; the first sensing function entity includes the first functional module and the second functional module; the second sensing function entity includes the third functional module, the fourth functional module, and the fifth functional module.

In some embodiments, for example contents of the above first functional module to the fifth functional module, reference may be made to the example description of the first functional module to the fifth functional module in the architecture of the above communication system, which will not repeated in the embodiments of the present disclosure herein.

It can be understood that, in the method provided by the embodiments of the present disclosure, the sensing function entity is divided into different functional modules, and each functional module has a specific task, which may ensure independence between functional modules, thereby facilitating expansion and maintenance of each functional module by the sensing function entity. In addition, by dividing the sensing function entity into different functional modules, mutual cooperation and collaboration may be performed between each functional module, and the flexibility of a sensing system may be improved, so as to better meet various sensing service requirements, thereby improving the sensing performance of the target.

In some embodiments, the sensing function entity further includes a sixth functional module, and the sixth functional module is configured to process sensing data.

In some embodiments, the sixth functional module is configured to process sensing data, including at least one of:
saving sensing data;
forwarding sensing data;
measuring a sensing echo signal;
screening out the target based on sensing data;
determining feature information of the target based on sensing data;
counting a false alarm rate and a missed alarm rate;
fusing sensing data; or
constructing a sensing map.

In some embodiments, the sixth functional module is deployed in a core network and/or an access network, where the access network includes a communication node, a base station, a communication centralized unit, a communication distributed unit, and a terminal device.

It should be noted that, for example contents of the first functional module to the sixth functional module, reference may be made to the example description of the first functional module to the fifth functional module in the architecture of the above communication system, which will not repeated in the embodiments of the present disclosure herein.

In some embodiments, based on different sensing service types, a sensing cooperation flow between the first sensing unit and the second sensing unit (i.e., a flow in which the sensing function entity performs sensing detection on the target through the first sensing unit and configures the second sensing unit so as to enable the second sensing unit to performs cooperative sensing detection on the target) may be divided into an area sensing type and a tracking sensing type. A sensing cooperation flow of the area sensing type and a sensing cooperation flow of the tracking sensing type are introduced below with examples respectively.

### I. Sensing cooperation flow of the area sensing type:

In some embodiments, the sensing function entity establishes a sensing service, and determines a sensing service type based on the sensing service. If the sensing type is the area sensing type, a first sensing unit meeting requirements is selected according to a sensing range and a sensing address required by the sensing service, a transceiving mode of a sensing signal (for example, transmitting and receiving by the same entity, transmitting by entity A and receiving by entity B) is determined, and a time domain resource, a frequency domain resource, a spatial domain resource, and a code domain resource required for the sensing signal are configured. Next, the sensing function entity determines whether the sensing range required by the sensing service overlaps with a sensing range of a second sensing unit; if so, the sensing function entity completes coordination of sensing signal sending resources with the second sensing unit. Sensing signals of the first sensing unit and the second sensing unit form orthogonality or avoidance in at least one of time domain, frequency domain, code domain, or spatial domain to avoid mutual interference.

In some embodiments, the sensing function entity may be deployed in different positions of a core network or an access network, that is, the sensing function entity may be located in different network architectures to meet a sensing service requirement and different sensing scenarios. Based on different network architectures, the above sensing cooperation flow is also different. A sensing cooperation flow under different network architectures is introduced with examples below.

Architecture 1, the sensing function entity is deployed in a core network, and the first sensing unit and the second sensing unit are respectively deployed in a communication node A and a communication node B of an access network. At this time, the sensing cooperation flow of the first sensing unit and the second sensing unit on the target is cooperated between a station-type sensing unit and a station-type sensing unit.

In some embodiments, the sensing function entity performs a signaling interaction flow with the first sensing unit and/or the second sensing unit through an interface between the core network and the access network. The signaling interaction flow is used to configure the second sensing unit to perform cooperative sensing detection on the target.

In some embodiments, the signaling interaction flow includes: sending a first message to the second sensing unit, where the first message is used to request the second sensing unit to perform cooperative sensing detection on the target.

In some embodiments, the first message includes at least one of:
feature information of the target;
a sensing signal configuration of the first sensing unit; or
a sensing signal configuration of the second sensing unit.

In some embodiments, the feature information of the target includes at least one of:
real-time position information of the target;
a historical movement track of the target;
a predicted movement track of the target;
a contour feature of the target;
an echo signal parameter of the target;
a sensing accuracy of the target; or
an identifier of the target.

In some embodiments, the signaling interaction flow further includes: receiving a second message sent from the second sensing unit, where the second message is used to respond to the first message.

In some embodiments, the second message is used to indicate at least one of:
the second sensing unit agreeing to or refusing to perform sensing detection on the target;
a modification suggestion of the second sensing unit for the sensing signal configuration of the second sensing unit; or
a modification suggestion of the second sensing unit for the sensing signal configuration of the first sensing unit.

In some embodiments, an interface information element involved in this architecture include: an interface information element between the sensing function entity and the first sensing unit, and an interface information element between the sensing function entity and the second sensing unit. Exemplarily, an interface information element between the sensing function entity and the first sensing unit include: sensing function entity to first sensing unit; first sensing unit to sensing function entity. The interface information element between the sensing function entity and the second sensing unit include: sensing function entity to second sensing unit; second sensing unit to sensing function entity.

Exemplarily, the sensing function entity may send a first message to the second sensing unit based on an interface between the core network and the access network (i.e., an interface information element between the sensing function entity and the second sensing unit). Exemplarily, the sensing function entity performs a signaling interaction flow with the first sensing unit to negotiate a time domain resource, a frequency domain resource, a spatial domain resource, and a code domain resource required for sending a sensing signal by the first sensing unit. Next, the sensing function entity sends the first message to the second sensing unit through the signaling interaction flow, so as to notify the second sensing unit of the sensing signal configuration of the first sensing unit and request the second sensing unit to perform cooperative sensing detection on the target.

The second sensing unit sends a second message to the sensing function entity in response to the first message. At this time, the sensing function entity may determine, based on the second message, whether the second sensing unit can realize cooperative sensing detection on the target. For example, the sensing function entity determines, based on the second message, whether the second sensing unit can achieve orthogonality or avoidance with the sensing resource of the first sensing unit. If not, the sensing function entity re-negotiates, with the first sensing unit, the sensing resource used for sending the sensing signal based on the modification suggestion of the second sensing unit for the sensing signal configuration of the second sensing unit or for the sensing signal configuration of the first sensing unit.

In some embodiments, an interface information element involved in this architecture include: an interface information element between the sensing function entity and the first sensing unit, and an interface information element between the first sensing unit and the second sensing unit. The interface information element between the sensing function entity and the first sensing unit include: sensing function entity to first sensing unit; first sensing unit to sensing function entity. The interface information element between the first sensing unit and the second sensing unit include: first sensing unit to second sensing unit; second sensing unit to first sensing unit.

Exemplarily, the sensing function entity does not directly send the first message to the second sensing unit, but sends the first message to the second sensing unit through the interface information element between the sensing function entity and the first sensing unit. Exemplarily, the sensing function entity sends the first message to the first sensing unit based on the signaling interaction flow. After receiving the first message sent from the sensing function entity, the first sensing unit first determines, based on its own sensing capability, whether to adopt the sensing signal configuration of the first sensing unit, and feeds back, to the sensing function entity, a message of agreeing or refusing the sensing signal configuration or modifying the sensing signal configuration. Next, the first sensing unit may perform a signaling interaction flow with the second sensing unit through an interface between the communication node A and the communication node B, i.e., forwarding the first message to the second sensing unit.

The second sensing unit sends a second message to the first sensing unit in response to the first message, and the first sensing unit may further forward the second message to the sensing function entity, so that the sensing function entity determines, based on the second message, whether the second sensing unit can realize cooperative sensing detection on the target.

It can be understood that, based on the sensing architecture provided in Architecture 1, by deploying the first sensing unit and the second sensing unit in the access network, a transmission volume of sensing data in the network may be reduced, and network delay and communication load may be reduced. In addition, through sensing cooperation between station-type sensing units, sensing data dispersed at various sites may be aggregated and integrated to obtain a more comprehensive and accurate sensing result.

Architecture 2, in a case where the sensing function entity includes the first sensing function entity and the second sensing function entity, the first sensing function entity is deployed in a core network, and the second sensing function entity is deployed in a centralized unit of an access network. The first sensing unit and the second sensing unit are respectively deployed in a distributed unit A and a distributed unit B of the access network. At this time, the sensing cooperation flow of the first sensing unit and the second sensing unit on the target is cooperated between a station-type sensing unit and a station-type sensing unit.

In some embodiments, the centralized unit in which the sensing function entity deploys the second sensing function entity performs a signaling interaction flow with the second sensing unit. The signaling interaction flow is used to configure the second sensing unit to perform cooperative sensing detection on the target.

In some embodiments, an interface information element involved in this architecture include: an interface information element between the sensing function entity and the distributed unit A and an interface information element between the sensing function entity and the distributed unit B. The centralized unit of the second sensing function entity may perform a signaling interaction flow with the first sensing unit and/or the second sensing unit through the above interface information elements.

Exemplarily, the first sensing function entity sends a first message to the first sensing unit through the second sensing function entity, so that the first sensing unit determines, based on the first message, whether sensing detection may be performed on the target. The first sensing function entity sends a first message to the second sensing unit through the second sensing function entity, so that the second sensing unit determines, based on the first message, whether cooperative sensing detection may be performed on the target. For example contents of the signaling interaction flow, reference may be made to the signaling interaction flow in Architecture 1 above, which will not be repeated in the embodiments of the present disclosure herein.

It can be understood that, based on the sensing architecture provided in Architecture 2, by deploying sensing units in the distributed unit A and the distributed unit B of the access network, distributed deployment of a sensing function is realized. Such deployment may reduce a risk of a sensing fault of a single site and improve stability and reliability of a sensing system. In addition, by deploying sensing units in different distributed units, the sensing function entity may flexibly configure and expand sensing units based on sensing service requirements, so as to better meet sensing requirements in different areas and sensing scenarios.

Architecture 3, the sensing function entity is deployed in a core network, the first sensing unit is deployed in a communication node C of an access network, and the second sensing unit is deployed in a terminal of the access network. At this time, the sensing cooperation flow of the first sensing unit and the second sensing unit on the target is cooperated between a station-type sensing unit and a terminal-type sensing unit.

In some embodiments, when the sensing function entity is deployed in the core network, the sensing function entity and the first sensing unit in the communication node C need to perform a signaling interaction flow across a core network/access network interface. At this time, the first message and the second message are forwarded through the communication node C connected to the second sensing unit. At this time, an interface information element involved in this architecture include: an interface information element between the sensing function entity and the first sensing unit, where the interface information element between the sensing function entity and the first sensing unit include: sensing function entity to first sensing unit; first sensing unit to sensing function entity.

In some embodiments, the sensing function entity may send a first message (e.g., a sensing signal configuration of the first sensing unit) to the first sensing unit in the communication node C; the first sensing unit responds to the first message and may determine, based on factors such as its own sensing capability and communication service load, whether to adopt the sensing signal configuration. After determination, the first sensing unit feeds back, to the sensing function entity, a message of agreeing or refusing the sensing signal configuration or modifying the sensing signal configuration. At this time, the interface information element involved in the flow includes an interface information element between the sensing function entity and the first sensing unit, where the interface information element between the sensing function entity and the first sensing unit include: sensing function entity to first sensing unit; first sensing unit to sensing function entity.

In some embodiments, when the sensing function entity determines that there is a weak sensing field or a sensing blind area within the sensing range of the communication node C where the first sensing unit is located, the sensing function entity may determine, according to positions of sensing units adjacent to the first sensing unit and sensing ranges of the adjacent sensing units, whether the adjacent sensing units are terminals (i.e., second sensing units) capable of performing area sensing cooperation. If there is a terminal (i.e., a second sensing unit) capable of performing area sensing cooperation among the adjacent sensing units, the sensing function entity may perform a signaling interaction flow with the second sensing unit. For example contents of the signaling interaction flow, reference may be made to the signaling interaction flow in Architecture 1 above, which will not be repeated in the embodiments of the present disclosure herein.

In some embodiments, when the sensing function entity is deployed in the core network, the sensing function entity and the second sensing unit perform a signaling interaction flow based on a non-access stratum (NAS) interface.

In some embodiments, the sensing function entity may also be deployed in an access network. When the sensing function entity is deployed in the access network, the sensing function entity and the second sensing unit perform a signaling interaction flow through an air interface (referred to as a Uu interface in a 5G network).

In some embodiments, the first message further includes: a condition for starting sensing and a condition for exiting sensing. The condition for starting sensing includes: a time offset (an interval after receiving the first message at which cooperative sensing detection is started), a start position range (cooperative sensing detection is started when the target is within the position range). The condition for exiting sensing includes: an exit position range (cooperative sensing detection is exited when the target moves outside the position range).

In some embodiments, an interface information element involved in this architecture include: an interface information element between the sensing function entity and the first sensing unit, where the interface information element between the sensing function entity and the first sensing unit include: sensing function entity to first sensing unit; first sensing unit to sensing function entity.

Exemplarily, the sensing function entity sends a first message to the second sensing unit through the above interface information elements, so that the second sensing unit starts cooperative sensing detection within a specified position range. Meanwhile, the sensing function entity receives a second message sent from the second sensing unit to confirm whether the second sensing unit can realize cooperation of the sensing range of the first sensing unit.

In some embodiments, an interface information element involved in this architecture include: an interface information element between the sensing function entity and the first sensing unit, an interface information element between the sensing function entity and the second sensing unit, and an interface information element between the first sensing unit and the second sensing unit. The interface information element between the sensing function entity and the first sensing unit include: sensing function entity to first sensing unit; first sensing unit to sensing function entity. The interface information element between the sensing function entity and the second sensing unit include: sensing function entity to second sensing unit; second sensing unit to sensing function entity. The interface information element between the first sensing unit and the second sensing unit include: first sensing unit to second sensing unit; second sensing unit to first sensing unit.

Exemplarily, the sensing function entity may also notify the first sensing unit of a second sensing unit capable of performing cooperative sensing detection, so that the first sensing unit and the second sensing unit perform sensing negotiation. For example, the sensing function entity sends, to the first sensing unit, an identifier of a second sensing unit to be selected (e.g., an identifier of the second sensing unit or a terminal identifier), a sensing capability of the second sensing unit to be selected, and a first message. After receiving the above message, the first sensing unit forwards the first message to the second sensing unit and receives a second message sent from the second sensing unit. Finally, the first sensing unit may forward the second message to the sensing function entity.

It can be understood that, based on the sensing architecture provided in Architecture 3, by deploying a sensing function in a core network, an access network, and a terminal, distributed processing of sensing a target may be realized, thereby reducing a pressure on the core network and improving sensing efficiency. In addition, based on sensing service requirements, a number of second sensing units may be increased or decreased, and association management between the first sensing unit and the second sensing unit may be adjusted, so as to flexibly adapt to changes in sensing requirements and improve sensing performance of the target.

Architecture 4: the sensing function entity is deployed in a communication node of an access network. Exemplarily, the sensing function entity is deployed in a communication node D and a communication node E. Meanwhile, the first sensing unit is also deployed in the communication node D, and the second sensing unit is deployed in the communication node E. At this time, the sensing cooperation flow of the first sensing unit and the second sensing unit on the target is cooperated between a station-type sensing unit and a station-type sensing unit.

In some embodiments, the sensing function entity deploys a signaling interaction flow between the communication node where the sensing function entity is located and the second sensing unit. The signaling interaction flow is used to configure the second sensing unit to perform cooperative sensing detection on the target.

In some embodiments, the an interface information element involved in this architecture include: an interface information element between the first sensing unit and the second sensing unit. The interface information element between the first sensing unit and the second sensing unit include: first sensing unit to second sensing unit; second sensing unit to first sensing unit.

Exemplarily, the first sensing function entity deployed in the communication node D selects a sensing unit required for a sensing service, and internally negotiates, with a communication module of the communication node E, a sensing resource required for the sensing unit through the above interface information elements. In addition, the first sensing function entity may also perform a signaling interaction flow with a second sensing unit in an adjacent communication node E through the above interface information elements. Exemplarily, the first sensing unit or the first sensing function entity negotiates, through an interface between communication nodes, orthogonality or avoidance of sensing resources with a second sensing unit or a second sensing function entity in the communication node E. For example contents of the signaling interaction flow, reference may be made to the signaling interaction flow in Architecture 1 above, which will not repeated in the embodiments of the present disclosure herein.

Exemplarily, the first sensing unit (i.e., the first sensing function entity) sends a first message to the second sensing unit (i.e., the second sensing function entity), and receives a second message sent from the second sensing unit, to determine whether the second sensing unit can realize cooperative sensing detection on the target.

It should be noted that, if the communication node D and the communication node E are two communication base stations respectively, the sensing negotiation between the first sensing unit and the second sensing unit will affect a protocol of an interface between base stations.

It can be understood that, based on the sensing architecture provided in Architecture 4, by deploying the first sensing unit and the second sensing unit in the communication node D and the communication node E, to realize cooperation between station-type sensing units, real-time performance of sensing the target may be improved, accuracy of acquired sensing data may be improved, and a sensing capability of the target may be improved.

Architecture 5, the sensing function entity is deployed in a centralized unit of an access network, and the first sensing unit and the second sensing unit are respectively deployed in a distributed unit A and a distributed unit B of the access network. At this time, the sensing cooperation flow of the first sensing unit and the second sensing unit on the target is cooperated between a station-type sensing unit and a station-type sensing unit.

In some embodiments, the sensing function entity deploys a signaling interaction flow between the centralized unit of the sensing function entity and the second sensing unit. The signaling interaction flow is used to configure the second sensing unit to perform cooperative sensing detection on the target. For the signaling interaction flow between the sensing function entity and the first sensing unit and/or the second sensing unit, reference may be made to the signaling interaction flow in Architecture 1 above, which will not repeated in the embodiments of the present disclosure herein.

In some embodiments, an interface information element involved in this architecture include: an interface information element between the sensing function entity and the distributed unit A. and an interface information element between the sensing function entity and the distributed unit B.

It can be understood that, based on the sensing architecture provided in Architecture 5, since the sensing function entity is deployed in the centralized unit, which has stronger processing capability and better security assurance capability, reliability and stability of a sensing system may be improved. In addition, based on cooperation between a station-type sensing unit and a station-type sensing unit, network transmission of sensing data may be reduced, and sensing efficiency may be improved.

### II. Sensing cooperation flow of the tracking sensing type:

In some embodiments, compared with the area sensing type, the tracking sensing type needs to invest an additional sensing resource for a selected specific sensing target to ensure sensing of the target. Therefore, the sensing function entity needs to adjust, in real time, a selection of the second sensing unit and a sensing resource of the first sensing unit according to a sensing track and a change of a sensing accuracy of the target.

In some embodiments, compared with the sensing cooperation flow and the interface information elements of the area sensing type, the tracking sensing type adds the following content on the interface information elements (whether it is an interface between the sensing function entity and the second sensing unit, or an interface between the first sensing unit and the second sensing unit):

X to second sensing unit.

In some embodiments, X may be the sensing function entity, the first sensing unit, or the centralized unit. The second sensing unit may be deployed in a communication node, or may be deployed in a terminal. X may send a first message (e.g., feature information of the target) to the second sensing unit.

In some embodiments, X may send a resource configuration update to the second sensing unit; and/or receive a resource configuration update sent from the second sensing unit.

In some embodiments, X may acquire sensing data fed back by a target sensing unit (e.g., the second sensing unit), and update, based on the fed-back sensing data, feature information of the target to obtain updated feature information of the target.

In some embodiments, X may also send the updated feature information of the target to the target sensing unit (e.g., the second sensing unit), so that the second sensing unit dynamically adjusts a beam of a sensing signal.

It can be understood that, by sending the updated feature information of the target to the target sensing unit, the target sensing unit may update and adjust, in time based on the feature information, a related configuration of sensing detection, thereby ensuring sensing continuity of the target.

FIG. 10 is a sensing cooperation method provided by the embodiments of the present disclosure, applied to a first sensing unit; the method at least includes S301;
In S301: a first message is sent to a second sensing unit.

The first message is used to request the second sensing unit to perform cooperative sensing detection on a target, where the target is a target on which sensing detection is performed by the first sensing unit.

In some embodiments, the first sensing unit determines a second sensing unit based on an indication of a sensing function entity, and sends a first message to the second sensing unit.

In some embodiments, for an example implementation of the above S301, reference may be made to the example implementations in Architecture 1 to Architecture 5 above, which will not repeated in the embodiments of the present disclosure herein.

It can be understood that, based on the sensing cooperation method provided by the embodiments of the present disclosure, by sending a first message to a second sensing unit, the first sensing unit may enable the second sensing unit to perform cooperative sensing detection on a target based on the first message. The second sensing unit may further perform a more in-depth and detailed sensing detection on the target on the basis of the sensing detection performed on the target by the first sensing unit, to compensate for deficiencies when the first sensing unit performs sensing detection on the target (for example, when the target moves to an edge area of the sensing range of the first sensing unit, a result of sensing detection performed on the target by the first sensing unit is not accurate enough). The embodiments of the present disclosure, by enabling the second sensing unit to perform cooperative sensing detection on the target, may improve sensing accuracy and ensure sensing performance of the target.

In some embodiments, as shown in FIG. 11, the above method further at least includes: S302.

In S302: a second message is received.

The second message is used to respond to the first message.

In some embodiments, for example contents of the second message, reference may be made to the example implementations in Architecture 1 to Architecture 5 above, which will not repeated in the embodiments of the present disclosure herein.

In some embodiments, the above method further includes: receiving a sensing signal configuration of the first sensing unit sent from a sensing function entity; and performing sensing detection on the target based on the sensing signal configuration of the first sensing unit. For an example implementation herein, reference may be made to the above S101, which will not repeated in the embodiments of the present disclosure herein.

In some embodiments, the above method further includes: receiving updated feature information of the target; and adjusting, based on the updated feature information of the target, the sensing signal configuration of the first sensing unit. For an example implementation herein, reference may be made to the above S201 to S202, which will not repeated in the embodiments of the present disclosure herein.

It can be understood that, in the method provided by the embodiments of the present disclosure, receiving the updated feature information by the first sensing unit enables the first sensing unit to adjust, in time based on the updated feature information, a configuration of sensing detection on the target, thereby improving the sensing performance of the target, enhancing the sensing capability of the target, and further improving the sensing accuracy.

FIG. 12 is a sensing cooperation method provided by the embodiments of the present disclosure, applied to a second sensing unit; the method at least includes S401;
In S401: a first message is received.

The first message is used to request the second sensing unit to perform sensing detection on a target, where the target is a target on which sensing detection is performed by a first sensing unit.

In some embodiments, for the above S401, reference may be made to the example implementations in Architecture 1 to Architecture 5 above, which will not repeated in the embodiments of the present disclosure herein.

It can be understood that, based on the sensing cooperation method provided by the embodiments of the present disclosure, by receiving a first message, the second sensing unit may perform cooperative sensing detection on a target in time based on the first message, so as to ensure sensing performance of the target when the target moves and crosses different communication nodes, thereby improving sensing accuracy.

In some embodiments, the above method further includes: sending a second message. The second message is used to respond to the first message. For an example implementation herein, reference may be made to the example implementations in Architecture 1 to Architecture 5 above, which will not repeated in the embodiments of the present disclosure herein.

In some embodiments, the above method further includes: receiving updated feature information of the target; adjusting, based on the updated feature information of the target, a sensing signal configuration of the second sensing unit. For an example implementation herein, reference may be made to the above S201 to S202, which will not repeated in the embodiments of the present disclosure herein.

It can be understood that, in the method provided by the embodiments of the present disclosure, receiving the updated feature information by the second sensing unit enables the second sensing unit to adjust, in time based on the updated feature information, a configuration of sensing detection on the target, thereby improving the sensing performance of the target, enhancing the sensing capability of the target, and further improving the sensing accuracy.

For ease of understanding, the sensing cooperation method provided by the embodiments of the present disclosure is described below by taking different scenarios as examples respectively.

Scenario 1: based on Architecture 1, a sensing function entity is deployed in a 5G network, and a first sensing unit and a second sensing unit are respectively deployed in adjacent base stations gNB A and gNB B. The sensing function entity includes a sensing management module and a sensing data processing module. The sensing function entity, based on a sensing service requirement (e.g., a sensing range, a sensing accuracy, a sensing resolution, a sensing delay, etc.), cooperates with two sensing units deployed in the adjacent base stations to perform cooperative sensing of a tracking sensing type on a specific target.

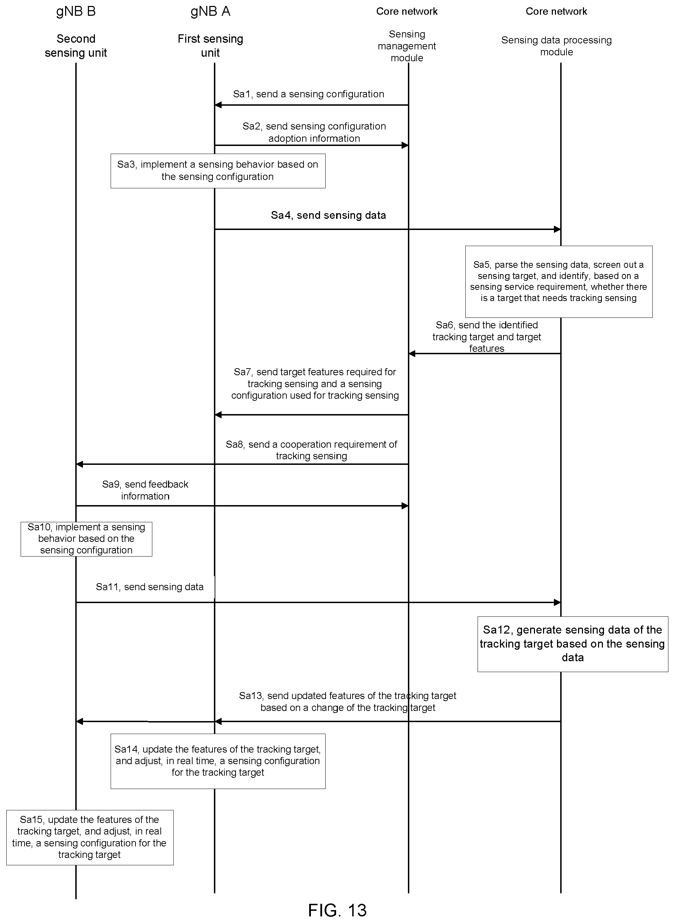

Exemplarily, in Scenario 1, a capability and a sensing range of a first sensing unit deployed in gNB A meet the sensing service requirement. As shown in FIG. 13, the sensing cooperation method provided by the embodiments of the present disclosure may be implemented as the following steps Sa1 to Sa15:
In Sa1, the sensing management module sends a sensing configuration to the first sensing unit in gNB A.

In some embodiments, the first sensing unit includes: a sensing signal sending unit A and a sensing echo receiving unit A. The second sensing unit includes: a sensing signal sending unit B and a sensing echo receiving unit B.

In some embodiments, the sensing configuration includes at least one of:
an identifier of the sensing signal sending unit;
an identifier of the sensing echo receiving unit;
a transceiving mode of a sensing signal;
a sensing signal configuration of the first sensing unit; for example, a signal waveform, a multiplexed channel, a power configuration, a time domain configuration, a frequency domain configuration, a spatial domain configuration, and a code domain configuration;
a sensing signal configuration of the second sensing unit; for example, a signal waveform, a multiplexed channel, a time domain configuration, a frequency domain configuration, a spatial domain configuration, and a code domain configuration;
a sending power of a sensing signal; or
a sensing range.

In Sa2, the first sensing unit sends sensing configuration adoption information to the sensing management module.

In some embodiments, the first sensing unit may determine, according to its own capability and a communication load of gNB A, to accept or reject the sensing configuration, modify the sensing configuration, etc. When the first sensing unit accepts the sensing configuration, the first sensing unit sends the sensing configuration adoption information to the sensing management module.

In Sa3, the first sensing unit implements a sensing behavior based on the sensing configuration.

In Sa4, the first sensing unit sends sensing data to the sensing data processing module.

In Sa5, the sensing data processing module parse the sensing data, screens out a sensing target, and identifies, based on a sensing service requirement, whether there is a target that needs tracking sensing. For example, in a drone detection service, if it is found that a track of a drone does not conform to a preset track, it is identified as an abnormal target and tracking sensing is performed.

In Sa6, the sensing data processing module sends the identified tracking target and target features to the sensing management module.

In Sa7, the sensing management module sends, to the first sensing unit, target features required for tracking sensing and a sensing configuration used for tracking sensing.

In some embodiments, in order to improve an accuracy of tracking sensing, the sensing management module may screen out, from other sensing units adjacent to the first sensing unit, a sensing unit that may perform cooperative sensing tracking. In this example, it is assumed that a second sensing unit in gNB B is selected for cooperation.

In Sa8, the sensing management module sends a cooperation requirement of tracking sensing to the second sensing unit.

In some embodiments, the cooperation requirement of tracking sensing includes: target features of a tracking target, and a sensing signal configuration of the second sensing unit, which is dedicated for tracking sensing.

In Sa9, the second sensing unit sends a feedback message to the sensing management module. The feedback message is used to indicate that the second unit accepts the tracking sensing cooperation for the tracking target.

In Sa10, the second sensing unit implements a sensing behavior based on the sensing configuration.

In Sa11, the second sensing unit sends sensing data to the sensing data processing module.

In Sa12, the sensing data processing module generates sensing data of the tracking target based on the sensing data.

In Sa13, based on a change of the tracking target (e.g., changes in track and positioning), the sensing data processing module sends updated features of the tracking target to the first sensing unit and the second sensing unit.

In Sa14, the first sensing unit updates the features of the tracking target, and adjusts, in real time, a sensing configuration for the tracking target. For example, the first sensing unit adjusts a duration of a sensing beam, an order of sensing beam switching, and a time point of sensing beam switching, to ensure that the tracking target can still be covered after the sensing beam is switched.

In Sa15, the second sensing unit updates the features of the tracking target, and adjusts, in real time, a sensing configuration for the tracking target. For example, the second sensing unit adjusts a duration of a sensing beam, an order of sensing beam switching, and a time point of sensing beam switching, to ensure that the tracking target can still be covered after the sensing beam is switched.

Scenario 2: based on Architecture 2, a CU of a 5G communication base station respectively manages DU A and DU B, a first sensing unit is deployed in DU A, a second sensing unit is deployed in DU B, and a second sensing function entity is deployed on the CU. The second sensing function entity includes: a sensing signal resource configuration module and a sensing echo data intermediate processing module. A first sensing function entity is deployed in a core network, and the first sensing function entity includes a sensing management module and a sensing data processing module. The sensing signal resource configuration module is configured to complete selection of a sensing unit and resource configuration of a sensing signal. The sensing echo data intermediate processing module is configured to complete preliminary fusion of echo data of the second sensing unit. The sensing management module is configured to complete generation of a sensing service requirement and selection of a sensing unit. The sensing data processing module is configured to complete functions such as identification of a sensing target, precise positioning, target track generation, false alarm rate and missed alarm rate counting, fusion of target data of cooperative sensing units (including positioning data fusion, track fusion, and target feature fusion), and construction of a sensing map.

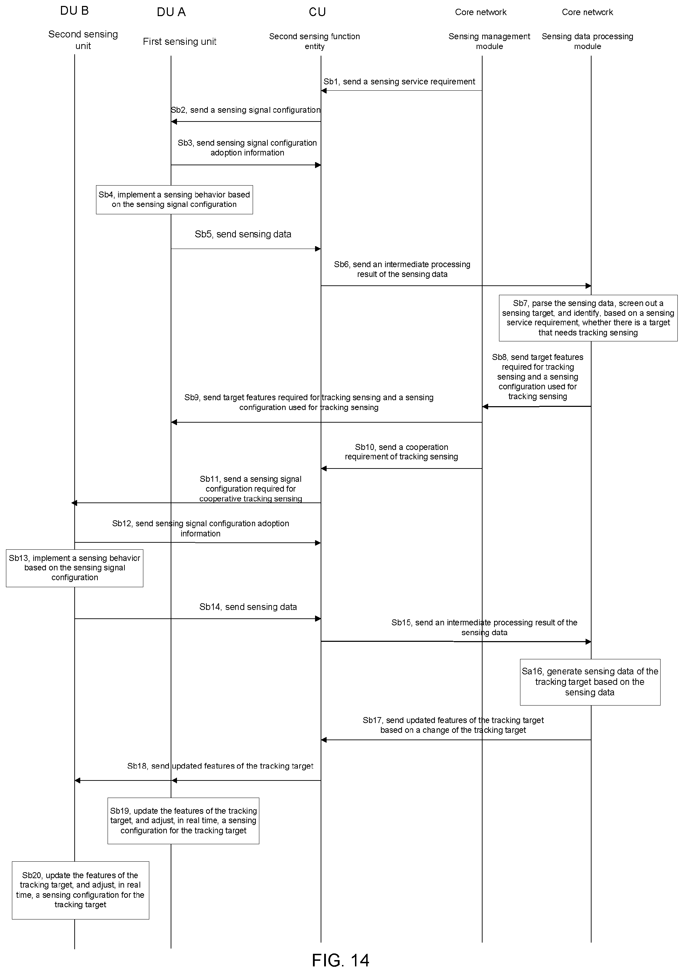

Exemplarily, in Scenario 2, a capability and a sensing range of a first sensing unit managed by the CU meet a sensing service requirement. As shown in FIG. 14, the sensing cooperation method provided by the embodiments of the present disclosure may be implemented as the following steps:
In Sb1, the sensing management module sends a sensing service requirement to the CU.

In some embodiments, the first sensing unit includes: a sensing signal sending unit A and a sensing echo receiving unit A. The second sensing unit includes: a sensing signal sending unit B and a sensing echo receiving unit B.

In some embodiments, the sensing service requirement includes at least one of:
an identifier of the sensing signal sending unit;
an identifier of the sensing echo receiving unit;
an identifier of a communication node where the first sensing unit is deployed. Exemplarily, the identifier of the communication node may be an identifier of DU A connected to the CU.
a transceiving mode of a sensing signal;
a sensing range; or
a sensing indicator.

In Sb2, the sensing signal resource configuration module in the CU sends a sensing signal configuration to the first sensing unit based on the sensing service requirement.

In some embodiments, the sensing signal resource configuration module determines the following contents based on the sensing requirement:
(1) whether to adopt a sensing unit selection suggested by the sensing management module. In some embodiments, if the CU selects other sensing units to meet the sensing service requirement, modification information may also be fed back to the core network.
(2) determining a sensing signal configuration of the sensing unit in combination with the sensing requirement and a load of a communication node where the selected sensing unit is located (in this scenario, DU A). For the sensing signal configuration, reference may be made to the example description in the above step S101, which will not be repeated herein.

In Sb3, the first sensing unit sends sensing signal configuration adoption information to the CU (sensing signal resource configuration module).

In some embodiments, the first sensing unit may determine, according to its own capability and a communication load of DU A, to accept or reject the sensing signal configuration, modify the sensing signal configuration, etc. When the first sensing unit accepts the sensing signal configuration, the first sensing unit sends the sensing signal configuration adoption information to the sensing signal resource configuration module.

In Sb4, the first sensing unit implements a sensing behavior based on the sensing signal configuration.

In Sb5, the first sensing unit sends sensing data to the CU (sensing echo data intermediate processing module).

Sb6, the CU (sensing echo data intermediate processing module) sends an intermediate processing result of the sensing data to the sensing data processing module.

In some embodiments, the sensing echo data intermediate processing module performs intermediate-stage processing on the sensing data. For example, the sensing echo data intermediate processing module measures sensing measurement values such as a time delay, an angle, a speed, and a Doppler of the sensing data, and sends the intermediate processing result and/or the original sensing data to the sensing data processing module in a core network domain.

In Sb7, the sensing data processing module parses the sensing data, screens out a sensing target, and identifies, based on a sensing service requirement, whether there is a target that needs tracking sensing. For example, in an intrusion detection service, if an intruding object is found, it is identified as an abnormal target and tracking sensing is performed.

In Sb8, the sensing data processing module sends, to the sensing management module, a target feature required for tracking sensing and a sensing configuration used for tracking sensing.

In Sb9, the sensing management module sends, to the first sensing unit, the target feature required for tracking sensing and the sensing configuration used for tracking sensing.

In some embodiments, in order to improve an accuracy of tracking sensing, the sensing management module may screen out, from other sensing units adjacent to the first sensing unit, a sensing unit that may perform cooperative sensing tracking. In this example, it is assumed that a second sensing unit in DU B is selected for cooperation.

In Sb10, the sensing management module sends a cooperation requirement of tracking sensing to the sensing signal resource configuration module of the second sensing function entity.

In some embodiments, the cooperation requirement of tracking sensing includes: a service requirement of cooperative tracking sensing, target features of a tracking target, and a sensing signal configuration of a sensing unit, which is dedicated for tracking sensing.

In some embodiments, the service requirement of cooperative tracking sensing includes at least one of:
an identifier of the sensing signal sending unit;
an identifier of the sensing echo receiving unit;
an identifier of a communication node where the second sensing unit is deployed. Exemplarily, the identifier of the communication node may be an identifier of DU B connected to the CU.
a transceiving mode of a sensing signal;
a sensing range; or
a sensing indicator.

In Sb11, the CU (sensing signal resource configuration module) sends, based on the cooperation requirement, a sensing signal configuration required for collaborative tracking sensing to the second sensing unit.

In some embodiments, the sensing signal resource configuration module determines the following contents based on the collaboration requirement:
(1) whether to adopt a sensing unit selection suggested by the sensing management module. In some embodiments, if the CU selects other sensing units to meet the sensing service requirement, modification information may also be fed back to the core network. In this scenario, the CU adopts the second sensing unit of DU B to participate in collaborative tracking sensing.
(2) determining a sensing signal configuration of the sensing unit in combination with the sensing requirement and a load of a communication node where the selected sensing unit is located (in this scenario, DU B). For the sensing signal configuration, reference may be made to the example description in the above step S101, which will not be repeated herein.

In Sb12, the second sensing unit sends sensing signal configuration adoption information to the CU (sensing echo data intermediate processing module).

In Sb13, the second sensing unit implements a sensing behavior based on the sensing signal configuration.

In Sb14, the second sensing unit sends sensing data to the CU (sensing echo data intermediate processing module).

In Sb15, the CU (sensing echo data intermediate processing module) sends an intermediate processing result of the sensing data to the sensing data processing module.

In some embodiments, if the sensing echo data intermediate processing module supports processing of cooperative sensing data of DU A and DU B, for example, performing soft combining on sensing measurement values of a sensing overlapping area, the processed intermediate processing result may be sent to the sensing data processing module. If not supported, intermediate processing results of the sensing data of the first sensing unit and the sensing data of the second sensing unit may be respectively sent to the sensing data processing module.

In Sb16, the sensing data processing module generates sensing data of the tracking target based on the sensing data. For example, the sensing data processing module synthesizes the sensing data of the first sensing unit and the second sensing unit, performs cooperative processing on the sensing data of a sensing overlapping area, and identifies the sensing data of the tracking target.

In Sb17, the sensing data processing module sends updated features of the tracking target to the CU based on a change of the tracking target (for example, changes in track and positioning). Exemplarily, the sensing data processing module may send the updated features of the tracking target to the CU through forwarding by the sensing management module.

In Sb18, the CU sends the updated features of the tracking target to the first sensing unit and the second sensing unit.

In Sb19, the first sensing unit updates the features of the tracking target, and adjusts, in real time, a sensing configuration for the tracking target. For example, the first sensing unit adjusts a duration of a sensing beam, an order of sensing beam switching, and a time point of sensing beam switching, to ensure that the tracking target can still be covered after the sensing beam is switched.

In Sb20, the second sensing unit updates the features of the tracking target, and adjusts, in real time, a sensing configuration for the tracking target. For example, the second sensing unit adjusts a duration of a sensing beam, an order of sensing beam switching, and a time point of sensing beam switching, to ensure that the tracking target can still be covered after the sensing beam is switched.

Scenario 3: based on Architecture 3, a sensing function entity is deployed in a core network. The sensing function entity includes a sensing management module and a sensing data processing module. A first sensing unit is deployed in gNB A. Two terminals with sensing functions are selected as collaboration units for tracking sensing of a target.

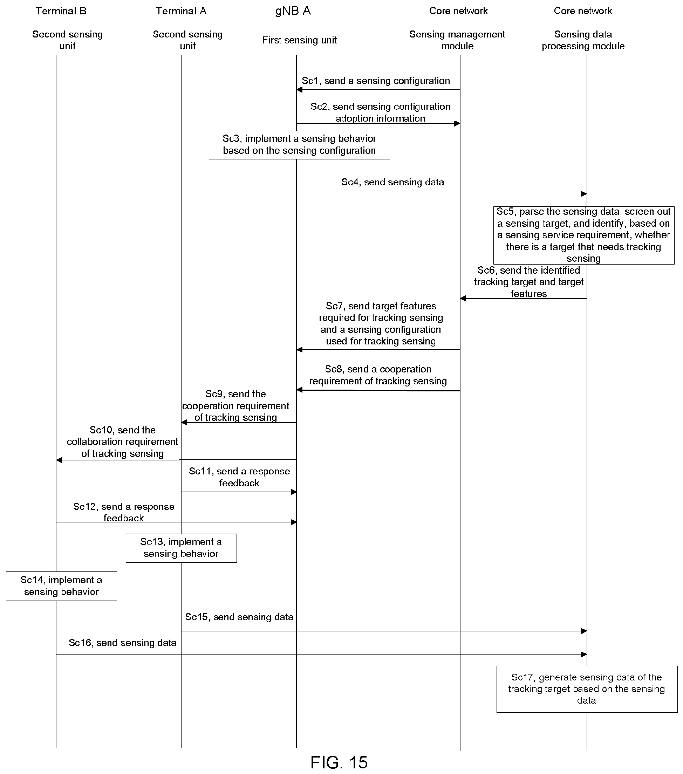

Exemplarily, in Scenario 3, a second sensing unit is deployed in a terminal A and a terminal B, and the terminal A and the terminal B meet a sensing service requirement. As shown in FIG. 15, the sensing cooperation method provided by the embodiments of the present disclosure may be implemented as the following steps:
In Sc1, the sensing management module sends a sensing configuration to the first sensing unit in gNB A.
In Sc2, the first sensing unit sends sensing configuration adoption information to the sensing management module.
In Sc3, the first sensing unit implements a sensing behavior based on the sensing configuration.
In Sc4, the first sensing unit sends sensing data to the sensing data processing module.
In Sc5, the sensing data processing module parses the sensing data, screens out a sensing target, and identifies, based on a sensing service requirement, whether there is a target that needs tracking sensing.
In Sc6, the sensing data processing module sends the identified tracking target and target features to the sensing management module.
In Sc7, the sensing management module sends, to the first sensing unit, a target feature required for tracking sensing and a sensing configuration used for tracking sensing.

In some embodiments, the sensing management module determines whether the first sensing unit can meet a tracking sensing requirement; if so, the sensing management module sends the target feature required for tracking sensing and the sensing configuration used for tracking sensing to the first sensing unit.

In some embodiments, in order to improve an accuracy of tracking sensing, the sensing management module may screen out, from other sensing units adjacent to the first sensing unit, a sensing unit that may perform cooperative sensing tracking. In this example, it is assumed that sensing units in the terminal A and the terminal B are selected for cooperation, and the sensing ranges of the sensing units in these two terminals can cover a current real-time position and a predicted track of the tracking target.

In Sc8, the sensing management module sends a cooperation requirement of tracking sensing to the first sensing unit.

In some embodiments, the cooperation requirement of tracking sensing includes: target features of a tracking target, a sensing signal configuration of the terminal A, and a sensing signal configuration of the terminal B. The above configurations are dedicated for tracking sensing.

In Sc9, the first sensing unit sends the cooperation requirement of tracking sensing to the terminal A.

In Sc10, the first sensing unit sends the cooperation requirement of tracking sensing to the terminal B.

In Sc11, the terminal A sends a response feedback to the first sensing unit.

In Sc12, the terminal B sends a response feedback to the first sensing unit.

In Sc13, the terminal A implements a sensing behavior.

In Sc14, the terminal B implements a sensing behavior.

In Sc15, the terminal A sends sensing data to the sensing data processing module.

In Sc16, the terminal B sends sensing data to the sensing data processing module.

In Sc17, the sensing data processing module generates sensing data of the tracking target based on the sensing data.

Scenario 4: based on Architecture 4, sensing function entities are respectively deployed in gNB A and gNB B. gNB A and gNB B respectively include a sensing management module, a sensing data processing module, and a sensing unit (a sensing signal sending unit and a sensing echo receiving unit). Based on a sensing service requirement issued by a core network, the sensing function entities on gNB A and gNB B complete functions such as configuration of sensing resources, transceiving of sensing signals, and processing of sensing data.

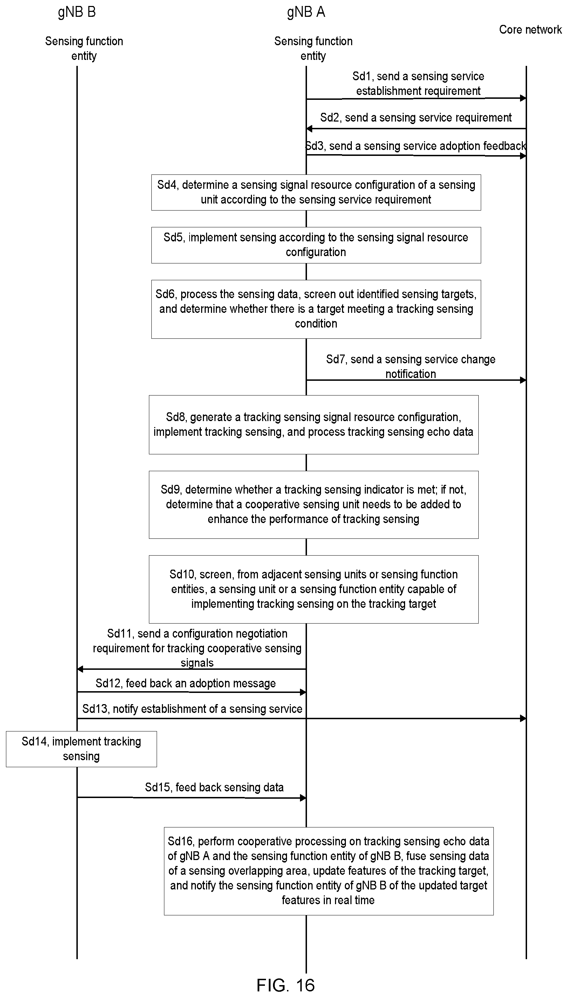

Exemplarily, in Scenario 4, after a user starts a sensing service, in this example, it is assumed that the user selects the sensing function entity in gNB A to start sensing, then the sensing function entity in gNB A initiates a sensing service establishment requirement to the core network. As shown in FIG. 16, the sensing cooperation method provided by the embodiments of the present disclosure may be implemented as the following steps:
In Sd1, gNB A sends a sensing service establishment requirement to the core network.
In Sd2, the core network sends a sensing service requirement to gNB A.

In some embodiments, the core network may determine the sensing service requirement based on registration information of the sensing service.

In Sd3, the sensing function entity of gNB A determines to adopt the sensing service requirement, and sends a sensing service adoption feedback to the core network.

In Sd4, the sensing function entity of gNB A determines a sensing signal resource configuration of a sensing unit according to the sensing service requirement.

In Sd5, the sensing unit of gNB A implements sensing according to the sensing signal resource configuration.

In Sd6, the sensing data processing module in the sensing function entity of gNB A processes the sensing data, screens out identified sensing targets, and determines whether there is a target meeting a tracking sensing condition.

In Sd7, the sensing function entity of gNB A sends a sensing service change notification to the core network.

In some embodiments, if the sensing function entity determines that there is a target meeting the tracking sensing condition, the sensing function entity may send a sensing service change notification to the core network, adding an establishment requirement and a sensing requirement of a tracking sensing service.

In Sd8, the sensing function entity of gNB A generates a tracking sensing signal resource configuration, implements tracking sensing, and processes tracking sensing echo data.

In Sd9, the sensing function entity of gNB A determines whether a tracking sensing indicator is met; if not, it determines that a cooperative sensing unit needs to be added to enhance the performance of tracking sensing.

In Sd10, the sensing function entity of gNB A screens, from adjacent sensing units or sensing function entities, a sensing unit or a sensing function entity capable of implementing tracking sensing on the tracking target. In this example, it is assumed that a sensing function entity deployed on gNB B is screened out.

In Sd11, gNB A sends, to gNB B, a configuration negotiation requirement for tracking cooperative sensing signals.

The configuration negotiation requirement includes a service requirement of tracking cooperative sensing, a suggested sensing signal resource configuration, and a description of features of the tracking target.

In Sd12, the sensing function entity of gNB B feeds back an adoption message to gNB A.

In some embodiments, the sensing function entity of gNB B determines, in combination with its own sensing capability and a communication load of gNB B, whether the tracking cooperative sensing requirement can be adopted; if applicable, the sensing function entity of gNB B feeds back the adoption message to gNB A.

In Sd13, gNB B notifies the core network to establish a sensing service.

In Sd14, gNB B implements tracking sensing.

In Sd15, gNB B feeds back sensing data to the sensing function entity of gNB A.

In some embodiments, gNB B proceeds according to the tracking sensing signal resource configuration, combines features of the tracking target, and feeds back the sensing data to the sensing function entity of gNB A.

In Sd16, the sensing function entity of gNB A performs cooperative processing on tracking sensing echo data of itself and the sensing function entity of gNB B, fuses sensing data of a sensing overlapping area, updates features of the tracking target (for example, features such as positioning and track changes of the target), and notifies the sensing function entity of gNB B of the updated target features in real time.

In some embodiments, Architecture 4 is usually used for a sensing service implemented in some independent areas, for example, intrusion sensing of an airport area is deployed only on several base stations of the airport, and base stations around the airport have no sensing service requirement; then the sensing function entity may be deployed in a sinking manner to an access network domain of the airport area, thereby reducing interaction delay and overhead with the core network.

The above mainly introduces the solutions of the embodiments of the present disclosure from the perspective of methods. It can be understood that, in order to realize the above functions, a sensing cooperation apparatus includes at least one of corresponding hardware structures and software modules for executing various functions. A person skilled in the art should easily realize that, in combination with the units and algorithm steps of each example described in the embodiments disclosed herein, the embodiments of the present disclosure can be implemented in a form of hardware or a combination of hardware and computer software. Whether a function is executed in a manner of hardware or computer software driving hardware depends on a specific application and design constraint conditions of the technical solution. Professional technicians may use different methods to implement the described functions for each specific application, but such implementation should not be considered as going beyond the scope of the embodiments of the present disclosure.

It can be understood that, in order to realize the above functions, the sensing cooperation apparatus includes corresponding hardware structures and/or software modules for executing various functions. A person skilled in the art should easily realize that, in combination with the algorithm steps of each example described in the embodiments of the present disclosure, the present disclosure can be implemented in a form of hardware or a combination of hardware and computer software. Whether a function is executed in a manner of hardware or computer software driving hardware depends on a specific application and design constraint conditions of the technical solution. Professional technicians may use different methods to implement the described functions for each specific application, but such implementation should not be considered as going beyond the scope of the present disclosure.

The embodiments of the present disclosure may divide functional modules of the sensing cooperation apparatus according to the above method embodiments, for example, each function may be divided into a corresponding functional module, or two or more functions may be integrated into one functional module. The above integrated modules may be implemented in a form of hardware or in a form of software. It should be noted that the division of modules in the embodiments of the present disclosure is schematic and is only a logical function division; and there may be other division methods in actual implementation. The following description takes an example where each function is divided into a corresponding functional module.

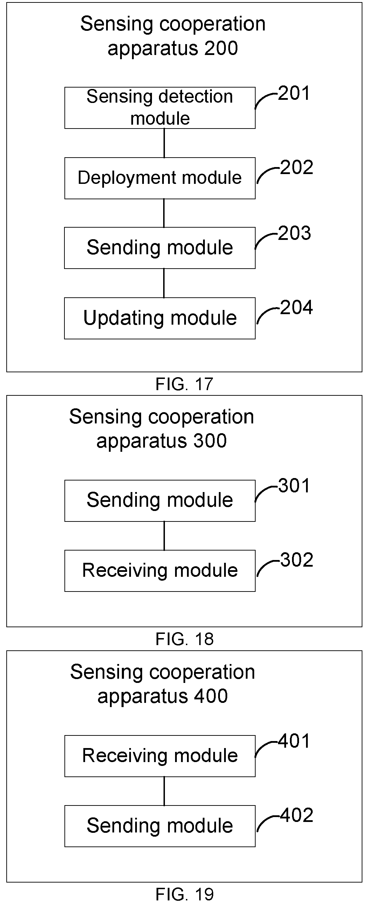

FIG. 17 is a structural schematic diagram of a sensing cooperation apparatus provided by the embodiments of the present disclosure. The sensing cooperation apparatus is applied to a sensing function entity, and may execute the sensing cooperation method provided by the above method embodiments. As shown in FIG. 17, the sensing cooperation apparatus 200 includes: a sensing detection module 201, a deployment module 202, a sending module 203, and an updating module 204.

The sensing detection module 201 is configured to perform sensing detection on a target through a first sensing unit.

The sensing detection module 201 is further configured to perform cooperative sensing detection on the target through a second sensing unit.

In some embodiments, the sensing function entity includes at least one of: a first functional module, a second functional module, a third functional module, a fourth functional module, and a fifth functional module; where the first functional module is configured to acquire a sensing service requirement; the second functional module is configured to acquire deployment information of sensing units; the third functional module is configured to determine a sensing signal sending configuration and a sensing echo receiving configuration; the fourth functional module is configured to manage cooperation between sensing units; the fifth functional module is configured to parse the sensing service requirement and select a sensing unit that meets the sensing service requirement.

In some embodiments, the sensing function entity includes a first sensing function entity and a second sensing function entity; the first sensing function entity includes the first functional module and the second functional module; the second sensing function entity includes the third functional module, the fourth functional module, and the fifth functional module.

In some embodiments, the sensing function entity is deployed in a core network.

In some embodiments, the sensing function entity performs a signaling interaction flow with the first sensing unit and/or the second sensing unit through an interface between the core network and an access network, and the signaling interaction flow is used to configure the second sensing unit to perform cooperative sensing detection on the target.

In some embodiments, in a case where the sensing function entity includes the first sensing function entity and the second sensing function entity, the first sensing function entity is deployed in a core network, and the second sensing function entity is deployed in a centralized unit of an access network.

In some embodiments, before performing cooperative sensing detection on the target through the second sensing unit, the deployment module 202 is configured to perform a signaling interaction flow between the centralized unit deploying the second sensing function entity and the second sensing unit, where the signaling interaction flow is used to configure the second sensing unit to perform cooperative sensing detection on the target.

In some embodiments, the sensing function entity is deployed in a centralized unit of an access network.

In some embodiments, before performing cooperative sensing detection on the target through the second sensing unit, the deployment module 202 is further configured to perform a signaling interaction flow between the centralized unit deploying the sensing function entity and the second sensing unit, where the signaling interaction flow is used to configure the second sensing unit to perform cooperative sensing detection on the target.

In some embodiments, the sensing function entity is deployed in a communication node of an access network.

In some embodiments, before performing cooperative sensing detection on the target through the second sensing unit, the deployment module 202 is further configured to perform a signaling interaction flow between the communication node deploying the sensing function entity and the second sensing unit, where the signaling interaction flow is used to configure the second sensing unit to perform cooperative sensing detection on the target.

In some embodiments, the signaling interaction flow includes:
sending a first message to the second sensing unit, where the first message is used to request the second sensing unit to perform cooperative sensing detection on the target.

In some embodiments, the signaling interaction flow further includes:
receiving a second message sent from the second sensing unit, where the second message is used to respond to the first message.

In some embodiments, in a case where the second sensing unit is deployed in a terminal, the first message and the second message are forwarded through a communication node connected to the second sensing unit.

In some embodiments, the first message includes at least one of:
feature information of the target;
a sensing signal configuration of the first sensing unit;
a sensing signal configuration of the second sensing unit.

In some embodiments, the feature information of the target includes at least one of:
real-time position information of the target;
a historical movement track of the target;
a predicted movement track of the target;
a contour feature of the target;
an echo signal parameter of the target;
a sensing accuracy of the target; or
an identifier of the target.

In some embodiments, the sensing signal configuration includes at least one of: a sensing signal sending configuration, a sensing echo receiving configuration, a sensing range configuration, or a sensing signal transceiving mode configuration.

In some embodiments, the sensing range configuration includes:
configuring a sensing range with a three-dimensional coordinate of a transmission point of a sensing signal as a center and with a sensing radius and a horizontal azimuth angle range and an elevation angle range of sensing beam scanning; and/or
configuring a sensing range based on a sensing resolution attenuation curve.

In some embodiments, the sensing signal sending configuration includes at least one of: a signal waveform used for sensing signal sending, a multiplexed channel, a power configuration, a time domain configuration, a frequency domain configuration, a spatial domain configuration, or a code domain configuration.

In some embodiments, the sensing echo receiving configuration includes at least one of: a signal waveform used for sensing echo reception, a multiplexed channel, a time domain configuration, a frequency domain configuration, a spatial domain configuration, or a code domain configuration.

In some embodiments, the signal waveform includes at least one of: an OFDM signal waveform, an OTFS signal waveform, or an FMCW signal waveform.

In some embodiments, the multiplexed channel includes at least one of: a channel of a synchronization signal, a channel of a channel state reference signal, a channel of a demodulation reference signal, a channel of a phase tracking reference signal, a channel of a sounding reference signal, a data channel, or a control channel.

In some embodiments, the time domain configuration includes at least one of: a duration, a start offset, a granularity, a periodic mode, a semi-persistent mode, or an aperiodic mode.

In some embodiments, the frequency domain configuration includes at least one of: whether a frequency band is continuous, a bandwidth of a sensing signal, or a comb-shaped frequency domain resource configuration.

In some embodiments, the spatial domain configuration includes at least one of: a number of sensing beams, identifiers of sensing beams, angle information of sensing beams, durations of sensing beams, a sensing beam switching order, sensing beam switching time points, or angle range information of sensing signal sending.

In some embodiments, the second message is used to indicate at least one of:
the second sensing unit agreeing to or refusing to perform sensing detection on the target;
a modification suggestion of the second sensing unit for the sensing signal configuration of the second sensing unit; or
a modification suggestion of the second sensing unit for the sensing signal configuration of the first sensing unit.

In some embodiments, the sensing function entity further includes a sixth functional module, and the sixth functional module is configured to process sensing data.

In some embodiments, the sixth functional module is configured to process sensing data, including at least one of:
saving sensing data;
forwarding sensing data;
measuring a sensing echo signal;
screening out the target based on sensing data;
determining feature information of the target based on sensing data;
counting a false alarm rate and a missed alarm rate;
fusing sensing data; or
constructing a sensing map.

In some embodiments, the sixth functional module is deployed in a core network and/or an access network, where the access network includes a communication node, a base station, a communication centralized unit, a communication distributed unit, and a terminal device.

In some embodiments, the sending module 203 is configured to determine, according to a requirement of a sensing service, a first sensing unit used to execute the sensing service; and send a sensing signal configuration of the first sensing unit to the first sensing unit.

In some embodiments, the sensing detection module 201 may be configured to: in a case where the first sensing unit performs sensing detection on the target, determine whether a capability of the first sensing unit meets a tracking requirement of the target; in a case where the capability of the first sensing unit does not meet the tracking requirement of the target, determine the second sensing unit; and perform cooperative sensing detection on the target through the second sensing unit.

In some embodiments, the updating module 204 is configured to acquire sensing data fed back by a target sensing unit, where the target sensing unit is a sensing unit used to perform sensing detection on the target, and the target sensing unit at least includes the first sensing unit and the second sensing unit; and update, based on the sensing data fed back by the target sensing unit, feature information of the target to obtain updated feature information of the target.

In some embodiments, the sending module 203 is further configured to send the updated feature information of the target to the target sensing unit.

FIG. 18 is a structural schematic diagram of a sensing cooperation apparatus provided by the embodiments of the present disclosure. The sensing cooperation apparatus is applied to a first sensing unit, and may execute the sensing cooperation method provided by the above method embodiments. As shown in FIG. 18, the sensing cooperation apparatus 300 includes: a sending module 301 and a receiving module 302.

The sending module 301 is configured to send a first message to a second sensing unit, where the first message is used to request the second sensing unit to perform cooperative sensing detection on a target, and the target is a target on which sensing detection is performed by the first sensing unit.

In some embodiments, the receiving module 302 is configured to receive a second message, the second message being used to respond to the first message.

In some embodiments, the sending module 301 may be configured to determine, based on an indication of a sensing function entity, the second sensing unit; and send the first message to the second sensing unit.

In some embodiments, the receiving module 302 is further configured to receive a sensing signal configuration of the first sensing unit sent from a sensing function entity; and perform sensing detection on the target based on the sensing signal configuration of the first sensing unit.

In some embodiments, the receiving module 302 is further configured to receive updated feature information of the target; and adjust, based on the updated feature information of the target, the sensing signal configuration of the first sensing unit.

FIG. 19 is a structural schematic diagram of a sensing cooperation apparatus provided by the embodiments of the present disclosure. The sensing cooperation apparatus is applied to a second sensing unit, and may execute the sensing cooperation methods provided by the above method embodiments. As shown in FIG. 19, the sensing cooperation apparatus 400 includes: a receiving module 401 and a sending module 402.

The receiving module 401 is configured to receive a first message, where the first message is used to request the second sensing unit to perform sensing detection on a target, and the target is a target on which sensing detection is performed by a first sensing unit.

In some embodiments, the sending module 402 is configured to send a second message, where the second message is used to respond to the first message.

In some embodiments, the receiving module 401 is further configured to receive updated feature information of the target; and adjust, based on the updated feature information of the target, a sensing signal configuration of the second sensing unit.

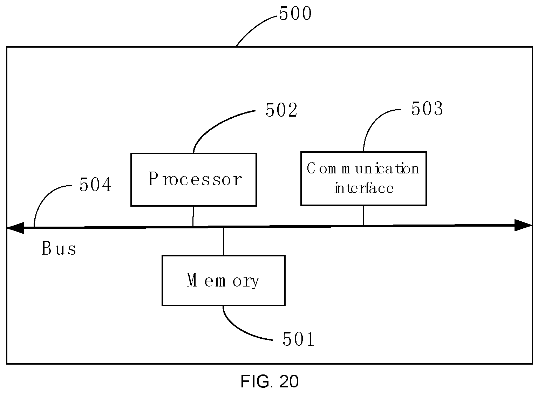

In a case where the functions of the above integrated modules are implemented in a form of hardware, the embodiments of the present disclosure provide a possible structure of a communication apparatus involved in the above embodiments. As shown in FIG. 20, the communication apparatus 500 includes: a processor 502, and a bus 504. In some embodiments, the communication apparatus 500 may further include a memory 501; in some embodiments, the communication apparatus 500 may further include a communication interface 503.

The processor 502 may implement or execute various exemplary logic blocks, modules, and circuits described in combination with the embodiments of the present disclosure. The processor 502 may be a central processor, a general-purpose processor, a digital signal processor, an application-specific integrated circuit, a field programmable gate array or other programmable logic devices, a transistor logic device, a hardware component, or any combination thereof, which may implement or execute various exemplary logic blocks, modules, and circuits described in combination with the embodiments of the present disclosure. The processor 502 may also be a combination that realizes a computing function, for example, a combination including one or more microprocessors, a combination of a DSP and a microprocessor, etc.

The communication interface 503 is configured to connect to other devices through a communication network. The communication network may be Ethernet, a wireless access network, a wireless local area network (WLAN), etc.

The memory 501 may be a read-only memory (ROM) or other types of static storage devices that can store static information and instructions, a random access memory (RAM) or other types of dynamic storage devices that can store information and instructions, or may be an electrically erasable programmable read-only memory (EEPROM), a magnetic disk storage medium or other magnetic storage devices, or any other medium that can be used to carry or store desired program codes in the form of instructions or data structures and that can be accessed by a computer, but is not limited thereto.

As a possible implementation, the memory 501 may exist independently of the processor 502, and the memory 501 may be connected to the processor 502 through the bus 504, and is configured to store instructions or program codes. When the processor 502 calls and executes the instructions or program codes stored in the memory 501, the sensing cooperation method provided by the embodiments of the present disclosure can be implemented.

In another possible implementation, the memory 501 may also be integrated with the processor 502. The bus 504 may be an extended industry standard architecture (EISA) bus, etc. The bus 504 may be divided into an address bus, a data bus, a control bus, etc. For ease of representation, only one thick line is used in FIG. 20, but it does not mean that there is only one bus or one type of bus.

Some embodiments of the present disclosure provide a computer-readable storage medium (e.g., a non-transitory computer-readable storage medium), having computer program instructions stored in the computer-readable storage medium, and when the computer program instructions are run on a computer, the computer is enabled to execute the sensing cooperation method according to any one of the above embodiments.

Exemplarily, the above computer-readable storage medium may include, but is not limited to: a magnetic storage device (e.g., a hard disk, a floppy disk, or a magnetic tape, etc.), an optical disk (e.g., a Compact Disk (CD), a Digital Versatile Disk (DVD), etc.), a smart card, and a flash memory device (e.g., an Erasable Programmable Read-Only Memory (EPROM), a card, a stick, or a key driver, etc.). Various computer-readable storage media described in the present disclosure may represent one or more devices and/or other machine-readable storage media for storing information. The term "machine-readable storage medium" may include, but is not limited to, a wireless channel and various other media capable of storing, containing, and/or carrying instructions and/or data.

The embodiments of the present disclosure provides a computer program product including instructions, and when the computer program product is run on a computer, the computer is enabled to execute the sensing cooperation method according to any one of the above embodiments.

The above are only specific implementations of the present disclosure, but the protection scope of the present disclosure is not limited thereto. Any change or replacement within the technical scope disclosed in the present disclosure should be covered within the protection scope of the present disclosure. Therefore, the protection scope of the present disclosure should be subject to the protection scope of the claims.

## Claims

1. A sensing cooperation method, applied to a sensing function entity, **characterized in that** the method comprises:
performing sensing detection on a target through a first sensing unit; and
performing cooperative sensing detection on the target through a second sensing unit.

2. The method according to claim 1, wherein the sensing function entity comprises at least one of: a first functional module, a second functional module, a third functional module, a fourth functional module, and a fifth functional module; wherein the first functional module is configured to acquire a sensing service requirement; the second functional module is configured to acquire deployment information of sensing units; the third functional module is configured to determine a sensing signal sending configuration and a sensing echo receiving configuration; the fourth functional module is configured to manage cooperation between sensing units; and the fifth functional module is configured to parse the sensing service requirement and select a sensing unit that meets the sensing service requirement.

3. The method according to claim 2, wherein the sensing function entity comprises a first sensing function entity and a second sensing function entity; the first sensing function entity comprises the first functional module and the second functional module; the second sensing function entity comprises the third functional module, the fourth functional module, and the fifth functional module.

4. The method according to claim 2, wherein the sensing function entity is deployed in a core network.

5. The method according to claim 4, wherein the sensing function entity is configured to perform a signaling interaction flow with the first sensing unit and/or the second sensing unit through an interface between the core network and an access network, and the signaling interaction flow is used to configure the second sensing unit to perform cooperative sensing detection on the target.

6. The method according to claim 3, wherein, in a case where the sensing function entity comprises the first sensing function entity and the second sensing function entity, the first sensing function entity is deployed in a core network, and the second sensing function entity is deployed in a centralized unit of an access network.

7. The method according to claim 6, wherein, before performing cooperative sensing detection on the target through the second sensing unit, the method further comprises:
performing a signaling interaction flow between the centralized unit where the second sensing function entity is deployed and the second sensing unit, and the signaling interaction flow is used to configure the second sensing unit to perform cooperative sensing detection on the target.

8. The method according to claim 2, wherein the sensing function entity is deployed in a centralized unit of an access network.

9. The method according to claim 8, wherein, before performing cooperative sensing detection on the target through the second sensing unit, the method further comprises:
performing a signaling interaction flow between the centralized unit where the sensing function entity is deployed and the second sensing unit, and the signaling interaction flow is used to configure the second sensing unit to perform cooperative sensing detection on the target.

10. The method according to claim 2, wherein the sensing function entity is deployed in a communication node of an access network.

11. The method according to claim 10, wherein, before performing cooperative sensing detection on the target through the second sensing unit, the method further comprises:
performing a signaling interaction flow between the communication node where the sensing function entity is deployed and the second sensing unit, and the signaling interaction flow is used to configure the second sensing unit to perform cooperative sensing detection on the target.

12. The method according to any one of claims 5, 7, 9 and 11, wherein the signaling interaction flow comprises:
sending a first message to the second sensing unit, where the first message is used to request the second sensing unit to perform cooperative sensing detection on the target.

13. The method according to claim 12, wherein the signaling interaction flow further comprises:
receiving a second message sent from the second sensing unit, where the second message is used to respond to the first message.

14. The method according to claim 13, wherein, in a case where the second sensing unit is deployed in a terminal, the first message and the second message are forwarded through a communication node connected to the second sensing unit.

15. The method according to claim 12, wherein the first message comprises at least one of:
feature information of the target;
a sensing signal configuration of the first sensing unit; or
a sensing signal configuration of the second sensing unit.

16. The method according to claim 15, wherein the feature information of the target comprises at least one of:
real-time position information of the target;
a historical movement track of the target;
a predicted movement track of the target;
a contour feature of the target;
an echo signal parameter of the target;
a sensing accuracy of the target; or
an identifier of the target.

17. The method according to claim 15, wherein a sensing signal configuration comprises at least one of: a sensing signal sending configuration, a sensing echo receiving configuration, a sensing range configuration, or a sensing signal transceiving mode configuration.

18. The method according to claim 17, wherein the sensing range configuration comprises:
configuring a sensing range with a three-dimensional coordinate of a transmission point of a sensing signal as a center and with a sensing radius and a horizontal azimuth angle range and an elevation angle range of sensing beam scanning; and/or
configuring a sensing range based on a sensing resolution attenuation curve.

19. The method according to claim 17, wherein the sensing signal sending configuration comprises at least one of: a signal waveform used for sensing signal sending, a multiplexed channel, a power configuration, a time domain configuration, a frequency domain configuration, a spatial domain configuration, or a code domain configuration.

20. The method according to claim 17, wherein the sensing echo receiving configuration comprises at least one of: a signal waveform used for sensing echo reception, a multiplexed channel, a time domain configuration, a frequency domain configuration, a spatial domain configuration, or a code domain configuration.

21. The method according to claim 19 or 20, wherein the signal waveform comprises at least one of: an orthogonal frequency division multiplex (OFDM) signal waveform, an orthogonal time frequency space (OTFS) signal waveform, or a frequency modulated continuous wave (FMCW) signal waveform.

22. The method according to claim 19 or 20, wherein the multiplexed channel comprises at least one of: a channel of a synchronization signal, a channel of a channel state reference signal, a channel of a demodulation reference signal, a channel of a phase tracking reference signal, a channel of a sounding reference signal, a data channel, or a control channel.

23. The method according to claim 19 or 20, wherein the time domain configuration comprises at least one of: duration, a start offset, a granularity, a periodic mode, a semi-persistent mode, or an aperiodic mode.

24. The method according to claim 19 or 20, wherein the frequency domain configuration comprises at least one of: whether a frequency band is continuous, a bandwidth of a sensing signal, or a comb-shaped frequency domain resource configuration.

25. The method according to claim 19 or 20, wherein the spatial domain configuration comprises at least one of: a number of sensing beams, an identifier of a sensing beams, angle information of the sensing beam, duration of the sensing beam, a sensing beam switching order, a sensing beam switching time point, or angle range information of sensing signal sending.

26. The method according to claim 13, wherein the second message is used to indicate at least one of:
the second sensing unit agreeing to or refusing to perform sensing detection on the target;
a modification suggestion of the second sensing unit for the sensing signal configuration of the second sensing unit; or
a modification suggestion of the second sensing unit for the sensing signal configuration of the first sensing unit.

27. The method according to claim 2, wherein the sensing function entity further comprises a sixth functional module, wherein the sixth functional module is configured to process sensing data.

28. The method according to claim 27, wherein the sixth functional module being configured to process sensing data, comprising at least one of:
saving the sensing data;
forwarding the sensing data;
measuring a sensing echo signal;
screening out the target based on the sensing data;
determining feature information of the target based on the sensing data;
counting a false alarm rate and a missed alarm rate;
fusing the sensing data; or
constructing a sensing map.

29. The method according to claim 27, wherein the sixth functional module is deployed in a core network and/or an access network, wherein the access network comprises a communication node, a base station, a communication centralized unit, a communication distributed unit, and a terminal device.

30. The method according to claim 1, further comprising:
determining, according to a requirement of a sensing service, the first sensing unit used to execute the sensing service; and
sending a sensing signal configuration of the first sensing unit to the first sensing unit.

31. The method according to claim 1, wherein performing cooperative sensing detection on the target through the second sensing unit comprises:
in a case where the first sensing unit performs sensing detection on the target, determining whether a capability of the first sensing unit meets a tracking requirement of the target;
in a case where the capability of the first sensing unit does not meet the tracking requirement of the target, determining the second sensing unit;
performing cooperative sensing detection on the target through the second sensing unit.

32. The method according to claim 1, further comprising:
acquiring sensing data fed back by a target sensing unit, wherein the target sensing unit is a sensing unit used to perform sensing detection on the target, and the target sensing unit at least comprises the first sensing unit and the second sensing unit; and
updating, based on the sensing data fed back by the target sensing unit, feature information of the target to obtain updated feature information of the target.

33. The method according to claim 32, further comprising:
sending the updated feature information of the target to the target sensing unit.

34. A sensing cooperation method, applied to a first sensing unit, **characterized in that** the method comprises:
sending a first message to a second sensing unit, wherein the first message is used to request the second sensing unit to perform cooperative sensing detection on a target, and the target is a target on which sensing detection is performed by the first sensing unit.

35. The method according to claim 34, further comprising:
receiving a second message, wherein the second message is used to respond to the first message.

36. The method according to claim 34, wherein sending the first message to the second sensing unit comprises:
determining, based on an indication of a sensing function entity, the second sensing unit; and
sending the first message to the second sensing unit.

37. The method according to claim 34, further comprising:
receiving a sensing signal configuration of the first sensing unit sent from a sensing function entity; and
performing sensing detection on the target based on the sensing signal configuration of the first sensing unit.

38. The method according to claim 37, further comprising:
receiving updated feature information of the target;
adjusting, based on the updated feature information of the target, the sensing signal configuration of the first sensing unit.

39. A sensing cooperation method, applied to a second sensing unit, wherein the method comprises:
receiving a first message, wherein the first message is used to request the second sensing unit to perform sensing detection on a target, and the target is a target on which sensing detection is performed by a first sensing unit.

40. The method according to claim 39, further comprising:
sending a second message, wherein the second message is used to respond to the first message.

41. The method according to claim 39, further comprising:
receiving updated feature information of the target;
adjusting, based on the updated feature information of the target, a sensing signal configuration of the second sensing unit.

42. A communication apparatus, **characterized by** comprising: a memory and a processor; the memory and the processor are coupled; the memory is configured to store instructions executable by the processor; the processor, upon executing the instructions, performs the sensing cooperation method according to any one of claims 1 to 41.

43. A computer-readable storage medium, **characterized in that** the computer-readable storage medium stores computer instructions, and upon the computer instructions being run on an electronic device, the electronic device is enabled to execute the sensing cooperation method according to any one of claims 1 to 41.
